## Europäisches Patentamt
## European Patent Office
## Office européen des brevets

(19)

(11) Veröffentlichungsnummer: **0 099 028**

**B1**

(12)

# EUROPÄISCHE PATENTSCHRIFT

(45) Veröffentlichungstag der Patentschrift:
02.09.87

(51) Int. Cl.⁴: **F 16 B 13/06**

(21) Anmeldenummer: **83106395.3**

(22) Anmeldetag: **30.06.83**

(54) **Schwerlast-Metalldübel.**

(30) Priorität: **08.07.82 DE 3225579**

(43) Veröffentlichungstag der Anmeldung:
**25.01.84 Patentblatt 84/4**

(45) Bekanntmachung des Hinweises auf die Patenterteilung:
**02.09.87 Patentblatt 87/36**

(84) Benannte Vertragsstaaten:
**AT BE CH DE FR GB IT LI NL SE**

(56) Entgegenhaltungen:
**AU-B-439 431**
**CH-A-338 589**
**CH-A-492 891**
**DE-A-2 138 300**
**DE-A-2 637 043**
**DE-B-2 249 762**
**FR-A-1 368 021**
**FR-A-2 321 064**
**GB-A-1 106 798**
**GB-A-1 487 030**
**US-A-1 410 258**

(73) Patentinhaber: **M. Meisinger KG, D-8890 Aichach (DE)**

(72) Erfinder: **Berger, Xaver, Theodor- Heuss Strasse 38, D-8890 Aichach (DE)**

(74) Vertreter: **Tiedtke, Harro, Dipl.- Ing., Patentanwaltsbüro Tiedtke- Bühling- Kinne- Grupe- Pellmann- Grams- Struif Bavariaring 4 Postfach 20 24 03, D-8000 München 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

## Beschreibung

Die Erfindung bezieht sich auf einen Schwerlast-Metalldübel für hochfestes Mauerwerk oder Beton, gemäß dem Oberbegriff des Patentanspruchs 1.

Dübel oben angegebener Art müssen den folgenden prinzipiellen Anforderungen gleichzeitig gerecht werden: Sie müssen zum einen leicht und zuverlässig zu montieren und zum anderen insbesondere auf Zug und Scherung hochbelastbar sein, wobei die Kraftübertragung vom Mauerwerk auf den am Schwerlast-Metalldübel hängenden Gegenstand so kontrolliert erfolgen soll, daß weder das Mauerwerk noch die an der Kraftübertragung beteiligten Elemente der Dübel-Konstruktion überbeansprucht werden und fließen.

Um diese Randbedingungen zu erfüllen, wurde ein Schwerlast-Metalldübel gemäß dem Oberbegriff des Patentanspruchs 1 entwickelt (DE-B-22 49 762), der wie folgt arbeitet und montiert wird: Auf einen Gewinde-Zugbolzen mit einem nach dem Einsetzen in das Mauerwerk innen liegenden Außengewinde wird ein als Mutter ausgebildeter Spreizkörper geschraubt, der eine konische Außenfläche aufweist. Dieser Spreizkörper wirkt mit einer relativ langen, zylinderförmig ausgebildeten metallischen Spreizhülse zusammen, die mit mehreren, auf der dem Spreizkörper zugewandten Ende beginnenden und in einen ungeschlitzten Bund auslaufenden Längsschlitzen versehen ist. In diesen ungeschlitzten Bund der Spreizhülse ragt ein weiterer Spreizkörper, der als Konusring ausgebildet ist, dessen konische Spreizfläche gegensinnig zur Spreizfläche des inneren Spreizkörpers geneigt ist. Der außen liegende Spreizkörper ist verschiebbar auf dem Gewinde-Zugbolzen montiert und er steht mit seiner der Spreizhülse abgewandten Stirnfläche in Anlagekontakt mit einer Druckhülse, die sich über den mittels des Schwerlast-Metalldübels zu befestigenden Gegenstand und ggf. über eine als Tellerfeder ausgebildete Beilagscheibe entweder am Schraubkopf des als Normschraube ausgebildeten Zugbolzens oder an einer Zugmutter des als Gewindestange ausgebildeten Zugbolzens abstützt. Die aus Spreizhülse, den Spreizkörpern, der Druckhülse und dem Gewinde-Zugbolzen bestehende Montageeinheit wird in eine beispielsweise gebohrte Ausnehmung des Mauerwerks gesteckt, so daß die Spreizhülse in dieser Ausnehmung verschwindet und der Gewindezugbolzen, mit dem daran befestigten Gegenstand weiterhin entweder mit dem Schraubenkopf oder - wenn eine Gewindestange verwendet wird - mit dem Gewinde-Endabschnitt weiterhin herausragt.

Durch Drehung des Zugbolzens bzw. der Spannmutter wird zunächst der innen liegende konische Spreizkörper relativ zur Spreizhülse verschoben, deren zwischen den Längsschlitzen liegende Bereiche dadurch von innen beginnend aufgeweitet und in Flächen-Preßkontakt mit der Mauerwerk-Ausnehmung gelangen. Der Flächen-Preßkontakt wird beim Weiterdrehen des Zugbolzens bzw. der Spannmutter immer größer, wodurch auch die den zu befestigenden Gegenstand an das Mauerwerk drückende Haltekraft zunehmend ansteigt. Wenn die Spreizkraft einen gewissen Schwellwert überschritten hat, kann der innen liegende Spreizkörper nicht mehr weiter in die Spreizhülse hineingezogen werden, so daß nun entweder der Schraubenkopf oder die Spannmutter auf den zu befestigenden Gegenstand hin gezogen wird. Während dieses Vorgangs wird die tellerfederartige Zwischenscheibe zunehmend beansprucht und die Druckhülse immer stärker auf den außen liegenden Spreizkonusring gedrückt. In dieser Phase fungiert der innere Spreizkörper als feste Mutter, in die für den Fall, daß der Zugbolzen als Normschraube ausgebildet ist, diese unter Verschiebung der Druckhülse und des außen liegenden Spreizkonusrings hineingeschraubt wird. Dadurch wird der mit dem Dübel zu haltende Gegenstand fest an das Mauerwerk gepreßt und es wird gleichzeitig bewirkt, daß die Verschiebung des äußeren Spreizkonusrings zum Bersten der Spreizhülse führt, wodurch ein besseres Anliegen der Spreizhülse an der Mauerwerk-Ausnehmung sichergestellt werden soll.

Dieser bekannte Schwerlast-Metalldübel hat den Nachteil, daß sowohl die Mauerwerkbohrung als auch der außen liegende Spreizkörper genau gefertigt werden müssen, um sicherzustellten daß die Spreizhülse zuverlässig gesprengt und der zu befestigende Gegenstand mit ausreichend großer Kraft gegen das Mauerwerk gedrückt werden kann. Es kann nämlich bei ungenauer Fertigung der Mauerwerkbohrung sehr leicht der Fall auftreten, daß entweder der durchgehende Bund der Spreizhülse zwar gesprengt, die Spreizhülse allerdings nicht in Flächenkontakt mit der Mauerwerkbohrung gebracht werden kann, oder daß der Bund der Spreizhülse bereits so eng am Mauerwerk anliegt, daß eine Sprengung des Bundes der Spreizhülse nicht mehr möglich ist, so daß der Zugbolzen bzw. die Spannmutter nicht in ausreichenden Flächenpreßkontakt mit dem zu befestigenden Gegenstand gebracht werden kann. Dieser in der Funktion liegende Nachteil der bekannten Dübel-Konstruktion kommt zu dem montagetechnischen Nachteil hinzu, der sich daraus ergibt, daß eine Vielzahl von Komponenten zu der Montageeinheit zusammengefügt werden muß. Darüberhinaus müssen diese Komponenten in genau definierter Weise zusammenwirken, um die erwünchten Effekte zuverlässig hervorrufen zu können. Dabei ist ein weiterer, wesentlicher Nachteil des bekannten Schwerlast-Metalldübels darin zu sehen, daß die aus dem inneren Spreizkörper und der Druckhülse bestehende Druckkörpereinrichtung den tragenden Querschnitt des Schwerlast-Metalldübels auf ein relativ kleines Maß beschränkt und festlegt.

Aus der DE-A-21 38 300 ist bereits ein Dübelanker bekannt, bei der der Anschlagkörper von einer stauchbaren Hülse gebildet ist, die bei Erreichen einer vorbestimmten Spreizwirkung von einer auf den Gewinde-Zugbolzen schraubbaren Mutter zusammendrückbar ist, so daß selbst bei größeren Toleranzen des vorgebohrten Befestigungslochs eine ausreichende Nachlaufstrecke zur sicheren Befestigung des anzuschraubenden Gegenstands verbleibt.

Aus der FR-A-23 21 064 ist ebenfalls ein Spreizdübel bekannt, bei dem sichergestellt ist, daß der zu befestigende Gegenstand stets mit ausreichend großer Kraft gegen das Mauerwerk gedrückt werden kann. Zu diesem Zweck steht der Gewindezugbolzen mit einem Innengewindeabschnitt eines abgestuften Zwischenelements in Eingriff, das sich über eine Radialschulter an der Spreizhülse abstützt und in diesem Bereich einen Gewindefortsatz trägt, der in einen Spreizkörper eingreift. Die auf den Gewinde-Zugbolzen schraubbare Mutter oder der Schraubenkopf des Gewinde-Zugbolzens stützt sich über eine Distanzhülse am äußeren Endabschnitt über eine abscherbare Schulter ab. Solange die abscherbare Schulter an der Distanzhülse befestigt ist, wird das Zwischenteil zusammen mit dem Gewinde-Zugbolzen gedreht, wodurch der Spreizkörper in die Spreizhülse gezogen wird. Sobald die vorbestimmte Befestigungskraft erreicht wird, schert die Schulter der Distanzhülse ab, wodurch der Gewinde-Zugbolzen in das Zwischenteil gedreht und dadurch der zu befestigende Gegenstand gegen die Wandfläche gedrückt werden kann.

Mit dieser Konstruktion ist es zwar möglich, die Anpreßkraft unabhängig von montagebedingten Ungenauigkeiten des Bohrlochs sehr groß zu halten. Die Funktion muß jedoch mit einem verhältnismäßig großen vorrichtungstechnischen Aufwand erkauft werden.

Aus der GB-A-1 487 030 und der CH-A-338 589 ist ebenfalls ein Metalldübel vorstehend bezeichneter Art bekannt, bei der die Spreizhülse mit ihrem dem Spreizkörper abgewandten Stirnflächenabschnitt - mit einer Druckschulter des als Schraube ausgebildeten Gewinde-Zugbolzens in Anlagekontakt steht und in diesem Bereich axial gestaffelte, sich in Umfangsrichtung erstreckende Ausnehmungen besitzt, die es der Zugschraube ermöglichen sollen, bei eingezogenem Spreizkörper ein weiteres Anziehen der Zugschraube unter Verformung des mit den Ausnehmungen versehenen Spreizhülsenabschnitts zu ermöglichen. Durch die Gestaltung der Spreizhülse und der Ausnehmungen kann jedoch der Fall auftreten, daß insbesondere bei kürzerer Ausbildung der Spreizhülse durch deren Aufweitung beim Einziehen des Spreizkörpers ein unkontrollierbar hoher Kontakt des mit den Ausnehmungen versehenen Spreizhülsenabschnitts mit der Innenwandung der Bohrung entsteht, so daß der erwünschte Nachlaufeffekt nicht zuverlässig eintreten kam.

Der Erfindung liegt die Aufgabe zugrunde, einen Schwerlast-Metalldübel gemäß dem Oberbegriff des Patentanspruchs 1 zu schaffen, der sich bei vereinfachter Herstellung durch ein Höchstmaß an Trag- und Haltekraft bezüglich Scher- und Biegebeanspruchung auszeichnet und mit dem zuverlässig dafür gesorgt wird, daß bei verankertem Metalldübel eine ausreichend große Andruckkraft für einen zu befestigenden Körper erzeugt werden kann.

Diese Aufgabe wird durch die in den kennzeichnenden Teilen der Patentansprüche 1, 4, 17 und 21 angegebenen Merkmale gelöst.

Mit diesen Merkmalen gelingt es, die Anzahl der Einzelteile der Dübel-Konstruktion erheblich zu reduzieren, da nunmehr die bei Stand der Technik aus einer Vielzahl von Einzelteilen bestehende Druckkörpereinrichtung von einem an den Gewinde-Zugbolzen angesetzten Anschlag gebildet ist. Dadurch kann nicht nur die Montage vereinfacht werden; vielmehr kann der erfindungsgemäße Schwerlast-Metalldübel auch wirtschaftlicher hergestellt werden, weil die beim Stand der Technik aus mehreren Einzelteilen bestehende Druckkörpereinrichtung einstückig mit dem Gewinde-Zugbolzen ausgebildet werden kann. Darüberhinaus arbeitet der erfindungsgemäße Schwerlast-Metalldübel im Betrieb und unter normalen Betriebsbedingungen zuverlässiger, weil der vollkommen überwindbare Anschlag unabhängig davon, wie exakt die Mauerwerkbohrung im Bereich des außen liegenden Spreizhülsenrandes gefertigt ist, unter allen Umständen zuverlässig dafür sorgt, daß eine ausreicheride "Nachlaufstrecke" für die Spannmutter bzw. für den Zugbolzen bereitgestellt wird, um eine große Anpreß- bzw. Haltekraft für den zu befestigenden Gegenstand zu erzeugen. Das Wegfallen des beim Stand der Technik vorhandenen zusätzlichen Spreizflächenkontakts im außenliegenden Bereich der Spreizhülse beeinflußt die Haltekraft des Schwerlast-Metalldübels nicht negativ, da diese zusätzliche Kraftübertragungsfläche bei Zugbeanspruchung der Dübel-Konstruktion ohnehin entlastet wird. Auf der anderen Seite eröffnet allerdings die erfindungsgemäße Gestaltung des Schwerlast-Metalldübels den die Tragfähigkeit der Dübelkonstruktion besonders positiv beeinflussenden Schritt, den Zugbolzen, in dem sich an die Spreizhülse nach außen zu anschließenden Bereich im Querschnitt wesenlich zu verstärken, wodurch dafür gesorgt wird, daß der Zugbolzen exakt an den Stellen mit einer höheren Festigkeit versehen wird, an denen auch die Biege- und Scherkraft-Beanspruchung am größten ist. Da der außen liegende Durchmesser des Gewinde-Zugbolzens durch die erfindungsgemäßen Maßnahmen erheblich angehoben werden kann, kann auch das Gewicht des vom Dübel zu haltenden Gegenstands wesentlich vergrößert werden, da das vom Zugbolzen aufnehmbare und von der Vertikalkraft des zu haltenden Gegenstands hervorgerufene Biegemoment mit der Potenz der Durchmesserzunahme und die maximal übertragbare Querkraft proportional zur Vergrößerung der Querschnittsfläche des Zugbolzens zunimmt. Durch die erfindungsgemäßen Maßnahmen ergibt sich der weitere zusätzliche Vorteil, daß durch die geeignete Gestaltung des überwindbaren Anschlags zuverlässig und unabhängig von der Beschaffenheit der Innenoberfläche der Mauerwerkbohrung dafür gesorgt werden kann, daß die Überwindung des Anschlags bei einer genau definierten Befestigungskraft erfolgt.

Diese Maßnahmen führen aber nicht nur zu einer Vereinfachung der Druckkörpereinrichtung selbst, sondern sie eröffnen auch die Möglichkeit, die Spreizhülse zu vereinfachen, wodurch die Herstellung des Schwerlast-Metalldübels noch wirtschaftlicher wird.

Gemäß einer ersten Ausführungsform nach Anspruch 1 ergibt sich der besondere Vorteil, daß die den Anschlag bildende, ringförmige Schulter besonders wirtschaftlich und mit einfachsten Mitteln so exakt herstellbar ist, daß die Schwellkraft, bei der dieser Anschlag abgeschert wird, in einem genau definierten Bereich gehalten werden kann.

Die Radialschulter kann gemäß Patentanspruch 2 entweder aus mehreren im Umfang beispielsweise gleichmäßig verteilt angeordneten Radialschulterabschnitten gebildet oder auch als ringförmig geschlossene Radialschulter ausgebildet sein.

Eine ebenfalls betriebszuverlässige und leicht herstellbare Variante ist Gegenstand der Patentansprüche 4 und 5.

Mit der Weiterbildung gemäß Unteranspruch 6 wird die oben angesprochene Belastbarkeit des Dübels auf Biegung und Scherung besonders groß, und durch die Ausbildung der Maßstrecke N zwischen der Radialschulter und der Querschnittserweiterung wird dafür gesorgt, daß die oben angesprochene "Nachlaufstrecke" unabhängig davon, mit welchen Toleranzen die Mauerwerkbohrung hergestellt wurde, in einem genau definierten Bereich liegt. Auf diese Weise können auch Gegenstände gegen die Mauerwerkoberfläche gepreßt werden, die bei Einwirkung der Befestigungskraft stark nachgeben.

Wenn der verstärkte Abschnitt des Gewinde-Zugbolzens dem Außendurchmesser der Spreizhülse angepaßt wird, ergibt sich eine maximale Haltekraft des Spreizdübels.

Wenn die mit dem erfindungsgemäßen Anschlag zusammenwirkende Spreizhülse gemäß Unteranspruch 7 ausgebildet ist, wird sie in optimaler Weise den an sie gerichteten Anforderungen gerecht. Weil die Längsschlitze der Spreizhülse vor einem biegesteif ausgebildeten Bund enden wird dafür Sorge getragen, daß die Spreizhülse ihren zwei elementaren Aufgaben voll gerecht wird. Zum einen wird der innen liegende Bereich so elastisch und biegeweich gehalten, daß der Spreizkörper sehr leicht in die Spreizhülse eingezogen werden kann und diese dadurch zuverlässig in Flächenpreßkontakt mit der Innenoberfläche der Mauerwerkbohrung gebracht werden kann; zum anderen sorgt der biegesteife Bund dafür, daß der Anschlag, beispielsweise in Form der abzuscherenden Ringschulter, zuverlässig beim Überschreiten der oben angesprochenen Schwellkraft abgeschert wird. Durch das Vorsehen des biegesteifen Bundes ergibt sich darüberhinaus der zusätzliche Vorteil, daß die Spreizhülse in einem äußerst wirtschaftlichen Verfahren hergestellt werden kann: Der biegesteife Bund ermöglicht es nämlich, die Spreizhülse aus einem Blechmaterial herzustellen, in das die Längsschlitze gestanzt und das dann im Bereich des biegesteifen Bundes in die endgültige Hülsenform gerollt wird. Dadurch ergibt sich der zusätzliche Vorteil, daß die Spreizhülse einen weiteren, durchgehenden Längsschlitz erhält, der dafür sorgt, daß die Spreizhülse beim Einziehen des Spreizkörpers mit Leichtigkeit insgesamt, d. h. über die Länge der Spreizhülse gleichmäßiger verteilt aufgespreizt wird. Dies ist um so günstiger, als dieser vorteilhafte Effekt mit einer Vereinfachung des Herstellungsverfahrens der Spreizhülse gekoppelt ist.

Zu einer besonders vorteilhaften Ausgestaltung der Spreizhülse gelangt man mit den Merkmalen des Unteranspruchs 8, weil mit diesen Merkmalen auf der einen Seite viel Material zur Verfügung gestellt wird, über das die Spreizkraft der Spreizhülse auf das Mauerwerk übertragen wird, so daß die Materialbeanspruchung relativ klein bleibt, und weil zum anderen eine äußerst große Biegeweichheit der einzelnen Spreizsegmente der Spreizhülse bereitgestellt wird. Dies hat insbesondere den Vorteil, daß bereits zu Beginn des Einziehens des Spreizkörpers ein sofortiges Aufweiten der Spreizhülse erfolgt, die dann vollkommen zuverlässig vor dem Mitdrehen gesichert ist. Wenn die Spreizhülse mit der Gestaltung gemäß Unteranspruch 10 aus Blechmaterial hergestellt ist, wobei die Schlitze in das Blechmaterial gestanzt sind, ist die im Schlitzgrund hinterschnittene Form der Längsschlitze mit keinem Herstellungs-Mehraufwand verbunden.

Wenn die Spreizhülse gemäß Unteranspruch 9 und/oder 10 ausgebildet ist, ergibt sich neben dem Vorteil einer möglichst einfachen Herstellung der zusätzliche Vorteil, daß durch die gezielte Auswahl der bei der Herstellung verformten Flächen der Spreizhülse beim Rollen des verstärkten Bundes im Bereich zwischen dem Bund und den Schlitzen eine Oberfläche entsteht, die an mehreren Stellen über den Außenumfang des Hülsenbundes bzw. der Hülse hinausragt. Dieser Oberflächenbereich kann wirksam dazu herangezogen werden, beim Eintreiben der aus Spreizkörper, Spreizhülse und Gewinde-Zugbolzen bestehenden Montageeinheit zuverlässig für eine sichere Verkrallung der Spreizhülse mit der Innenoberfläche der Mauerwerkbohrung zu sorgen. Wenn in diesem Fall nach dem Eintreiben die mit einem Schraubkopf versehene Zugschraube gedreht wird, stützt sich die Spreizhülse fest im Mauerwerk ab, so daß ein Mitdrehen verhindert und der Spreizkörper sofort in die Spreizhülse eingezogen wird.

Wie oben bereits erwähnt, ist eine weitere vorteilhafte Möglichkeit zur Realisierung des bei Einwirkung einer vorbestimmten Befestigungskraft vollkommen überwindbaren Anschlags Gegenstand des Patentanspruchs 4. Diese Variante ermöglicht in gleichem Maße wie die vorstehend beschriebene erste Ausführungsform eine einfache Herstellung einer äußerst tragfähigen Dübel-Konstruktion.

Wenn die radiale Erstreckung der Konusfläche derart der Stärke des Endabschnitts der Spreizhülse angepaßt ist, daß dieser beim Gleiten über die Konusfläche nicht über den Außendurchmesser des Zugbolzens ragt, tritt der oben angesprochene "Nachlaufeffekt" des Befestigungsbolzens stets auf, so daß der zu befestigende Gegenstand mit großer Kraft gegen das Mauerwerk gepreßt werden kann.

Vorteilhafte Ausgestaltungen der mit der Konusfläche zusammenwirkenden Spreizhülsen sind Gegenstand der Unteransprüche 11 bis 16.

Die Ausbildung der Spreizhülse gemäß Unteranspruch 11 hat wiederum den Vorteil, daß die Spreizhülse in mehrere definierte Funktionsabschnitte unterteilt wird, von denen jeder seiner speziellen Aufgabe optimal angepaßt ist.

So sorgt der innenliegende geschlitzte Bereich dafür, daß eine große kraftübertragende Oberfläche zwischen Spreizhülse und Mauerwerk zur Verfügung gestellt wird, der biegesteife Bund schafft die Grundlage für den besonders wirtschaftlichen Rollvorgang der Spreizhülse, und die sich anschließenden biegsamen Fortsätze des Bundes sorgen für die vollkommene Überwindbarkeit des oben angesprochenen Anschlags. Die Gestaltung der Spreizhülse ist dabei wiederum im Hinblick auf ein wirtschaftliches Herstellungsverfahren optimiert. Zur Herstellung einer derartigen Spreizhülse ist insbesondere die spanlose Formgebung geeignet. Dadurch können selbst komplizierteste Schlitzgestaltungen verwirklicht werden, ohne die Wirtschaftlichkeit des Herstellungsprozesses zu beeinflussen. Dadurch ist der Weg frei zu einer geometrischen Optimierung des geschlitzten und des die Fortsätze tragenden Bereichs der Spreizhülse, um den jeweiligen Anforderungen am besten gerecht zu werden. Der relativ biegesteife Bund ermöglicht wiederum einen zuverlässigen Rollvorgang, wodurch sich der weitere zusätzliche Vorteil ergibt, daß die radiale Elastizität der Spreizhülse weiter verbessert wird. Die spanlose Formgebung kann für alle Bereiche der Spreizhülse Anwendung finden. So kann beispielsweise durch Rollen des die Fortsätze tragenden Bereichs der Spreizhülse vor dem Ausstanzen der Freiräume zwischen den Fortsätzen die Stärke des Blechmaterials reduziert werden, wodurch auf einfache Weise die Biegeweichheit der Fortsätze gesteuert werden kann.

Eine weitere vorteilhafte Ausgestaltung der Spreizhülse ist Gegenstand des Unteranspruchs 13. Diese Ausgestaltung führt im wesentlichen zu den gleichen Vorteilen, wie sie oben bereits diskutiert wurden. Auch in dieser Ausführungsform der Spreizhülse werden jeweilige Funktionsbereiche in optimaler Weise der späteren Aufgabe angepaßt. Darüberhinaus ist auch diese Spreizhülse äußerst wirtschaftlich herzustellen, wobei diese Ausführungsform allerdings den zusätzlichen Vorteil aufweist, daß sie auch mit Umformmaschinen kleinerer Leistung herstellbar ist. Dies gelingt in erster Linie durch die Reduzierung der Wandstärke der Spreizhülse, indem zwei sich überlappende Hülsenteile von nahezu gleicher Wandstärke geschaffen werden. Durch den jeweils axial durchgehenden Längsschlitz erhalten die konzentrischen Hülsenteile eine sehr große radiale Elastizität, die es ermöglicht, den Spreizkörper, durch die innenliegenden biegsamen Endabschnitte zunächst geführt, zuverlässig unter Aufweitung der Hülsenteile in die Spreizhülsen einzuziehen.

Wenn die Hülsenteile gemäß Anspruch 14 aus gerolltem Blechmaterial bestehen, in das die jeweiligen Ausnehmungen in den Endbereichen gestanzt sind, ergibt sich der zusätzliche Vorteil, daß der durchgehende axiale Längsschlitz nicht mehr gesondert hergestellt werden muß. Besonders vorteilhaft ist es, wenn man die innere Hülse lediglich in dem an die biegsamen Endabschnitte angrenzenden Bereich rollt. Auf diese Weise behalten die biegsamen Endabschnitte auch nach dem Rollen weitestgehend ihre ebenflächige Form bei, so daß sie hohlprismenartig entlang des Hülsenumfangs verlaufen, mit ihren Eckenbereichen jedoch über die Außenumfangsfläche der inneren Hülse vorstehen. Dies kann beim Eintreiben der vormontierten Dübel-Montageeinheit wiederum dazu benutzt werden, für eine Verdrehsicherung der Spreizhülse zu sorgen.

Gemäß einer weiteren Lösungsvariante für das vorstehend erwähnte Problem wird gemäß Patentanspruch 17 die erforderliche Nachlaufstrecke für den Zugbolzen dadurch bereitgestellt, daß im Bereich der Spreizhülse eine Art Knautschzone geschaffen wird, die bei Einwirkung einer vorbestimmten Befestigungskraft in Funktion tritt. Abweichend von der bereits bekannten Konstruktion gemäß GB-A-1 487 030 ist die Spreizhülse durch die erfindungsgemäße Gestaltung der Schlitze so elastisch und biegeweich gehalten, daß der Spreizkörper sehr leicht in die Spreizhülse eingezogen werden kann und diese dadurch zuverlässig in Flächenpreßkontakt mit der Innenoberfläche der Mauerwerkbohrung gebracht werden kann, ohne daß zu befürchten ist, daß sich der Aufspreizvorgang in den Bereich der oben erwähnten Knautschzone auswirkt. Das Vorsehen des biegesteifen Bundes führt dabei zu dem zusätzlichen Vorteil, daß die Spreizhülse in einem sehr wirtschaftlichen Verfahren hergestellt werden kann. Er ermöglicht es nämlich, die Spreizhülse aus einem Blechmaterial herzustellen, in das die Längsschlitze gestanzt und das dann im Bereich des biegesteifen Bundes in die endgültige Hülsenform gerollt werden kann. Durch die Orientierung der Durchbrüche in Umfangsrichtung wird dafür gesorgt, daß dieser Rollvorgang durch das Vorsehen der einknickbaren Material-Schwachzonen nicht beeinträchtigt bzw. erschwert wird. Im übrigen treffen bei dieser Ausgestaltung auch hier die Vorteile zu, wie sie im Zusammenhang mit dem Unteranspruch 8 vorstehend dargelegt wurden. Die Versetzung der Durchbrüche zu den Ω-förmigen Ausnehmungen der Spreizhülse schafft eine sehr effektive Knautschzone, die zuverlässig die oben angesprochene Nachlaufstrecke bereitstellen kann.

Gemäß Anspruch 18 kann das Einknicken der Materialschwachzonen gut gesteuert werden. Die Weiterbildung gemäß Unteranspruch 19 führt wiederum zu den Vorteilen, wie sie weiter oben in bezug auf die Weiterbildung gemäß Unteranspruch 9 ausführlich dargelegt sind.

Wenn die Radialschulter des vorstehend beschriebenen Anschlags gemäß Anspruch 20 in Axialrichtung des Schwerlast-Metalldübels betrachtet außerhalb des zu befestigenden Gegenstands liegt, ergibt sich der besondere Vorteil, daß durch die Verlängerung des mit den Durchbrüchen versehenen Spreizhülsenbundes ein Gewinde-Zugbolzen Anwendung finden kann, der keine besonderen Anschlagflächen mehr aufweisen muß. Der Gewinde-Zugbolzen kann in diesem Fall wirtschaftlicher hergestellt bzw. als bereits fertiges Normteil gekauft und in die Dübel-Konstruktion eingegliedert werden. So kann der Gewinde-Zugbolzen von einer Normschraube gebildet sein, deren Schraubenkopf die Funktion der Radialschulter übernimmt. In einem anderen Fall kann der Gewinde-Zugbolzen von einer Gewindestange gebildet sein, auf die außerhalb der Mauerwerkausnehmung eine Spannmutter geschraubt ist, die dann beispielsweise über eine zwischen ihr und dem zu befestigenden Gegenstand eingelegte Beilagscheibe, die mit dem biegesteifen Bund der Spreizhülse in Anlagekontakt steht, die Funktion der Radialschulter übernimmt.

Die vorstehend beschriebene Möglichkeit, den Anschlag dadurch überwindbar zu machen, daß in der Spreizhülse eine Art Knautschzone geschaffen wird, die von einknickbaren Material-Schwachstellen gebildet ist, ist auch dann gegeben, wenn die Spreizhülse - wie weiter oben beschrieben - zweiteilig gemäß Unteranspruch 13 ausgebildet ist.

Durch das Nachaußenziehen des Spreizhülsenbundes durch die Bohrung des zu befestigenden Gegenstandes hindurch kann zwar der Außendurchmesser des Gewinde-Zugbolzens im Bereich des größten Biegemoments und der größten Scherkraft nicht so weit angehoben werden, wie dies bei den Ausführungsformen der Fall ist, bei denen der Anschlag von einem gesonderten an den Gewinde-Zugbolzen angeformten Materialabschnitt gebildet ist. Weil dieser nach außen gezogene Spreizhülsenbund jedoch auch in festen Preßkontakt mit der Mauerwerkbohrung gebracht werden kann, ohne in Kauf nehmen zu müssen, daß dadurch die notwendige Nachlaufstrecke eingeschränkt wird, ist diese Reduzierung des maximalen Schaftdurchmessers des Gewinde-Zugbolzens nicht von so großer Bedeutung, zumal die Spreizhülse auch relativ dünn ausgebildet werden kann.

Anspruch 21 betrifft eine weitere Ausgestaltung der Erfindung.

Nachstehend werden anhand schematischer Zeichnungen mehrere Ausführungsbeispiele der Erfindung näher erläutert. Es zeigen:

Fig. 1 eine Schnittansicht einer ersten Ausführungsform einer in das Mauerwerk eingesetzten Dübel-Konstruktion,

Fig. 2 in vergrößerter Darstellung eine Schnittansicht der in Fig. 1 dargestellten Spreizhülse,

Fig. 3 eine Ansicht der in Fig. 2 dargestellten Spreizhülse in einer Abwicklung,

Fig. 4 eine Ansicht der Spreizhülse gemäß Fig. 3,

Fig. 5 eine Ansicht der in Fig. 2 gezeigten Spreizhülse,

Fig. 6 eine Teilschnittansicht einer weiteren Ausführungsform des in das Mauerwerk eingesetzten Schwerlast-Metalldübels,

Fig. 7 eine der Fig. 3 ähnliche Ansicht der in Fig. 6 gezeigten Spreizhülse,

Fig. 8 eine der Fig. 6 ähnliche Ansicht einer weiteren Ausführungsform des Schwerlast-Metalldübels,

Fig. 9 eine Abwicklung der in Fig. 8 gezeigten äußeren Hülse,

Fig. 10 eine Abwicklung der in Fig. 8 gezeigten inneren Hülse, und

Fig. 11 eine Teilansicht einer gerollten inneren Hülse gemäß Fig. 8.

Fig. 12 in einer der Fig. 3 ähnlichen Ansicht eine Abwicklung einer weiteren Ausführungsform einer Spreizhülse, und

Fig. 13 und 14 der Fig. 8 ähnliche Ansichten zweier weiterer Ausführungsformen des Metalldübels.

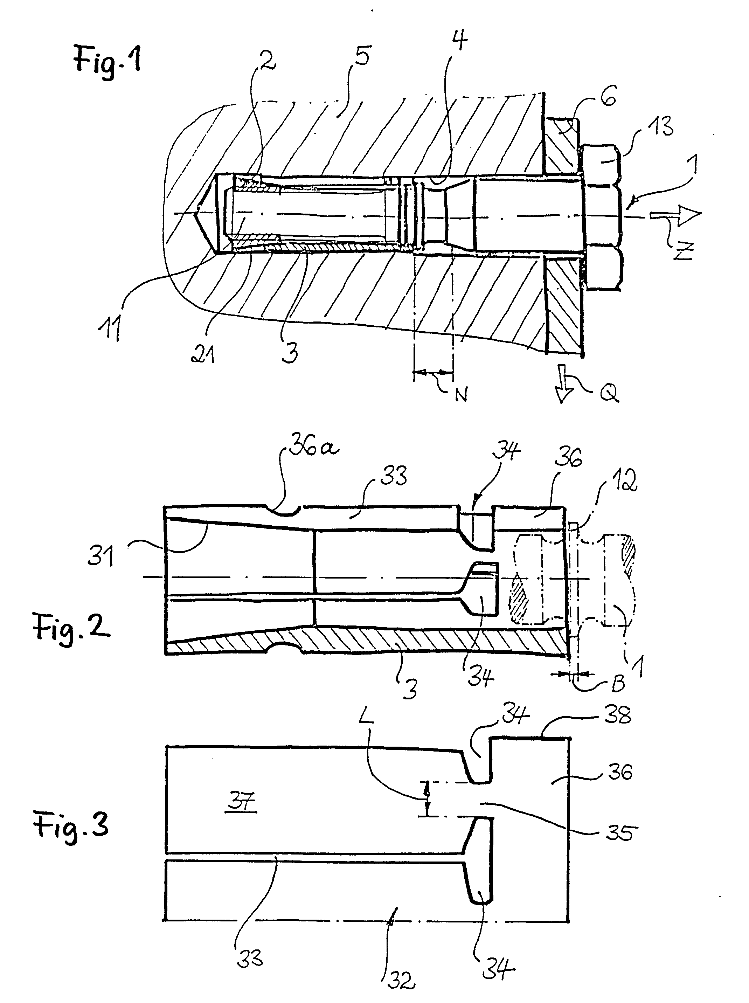

In Fig. 1 ist eine erste Ausführungsform des Schwerlast-Metalldübels gezeigt. Der Schwerlast-Metalldübel besteht aus einem Gewinde-Zugbolzen 1, einem kegelstumpfförmig ausgebildeten Spreizkorper 2 und einer Spreizhülse 3. Der aus diesen drei Komponenten zusammengesetzte Schwerlast-Metalldübel wird in dem in Fig. 1 dargestellten vormontierten Zustand in eine zylindrische Ausnehmung 44 eines hochfesten Mauerwerks 5 eingesetzt. Der Gewinde-Zugbolzen 1 weist auf seinem innenliegenden Ende ein Außengewinde 11 auf, das mit dem Innengewinde des Spreizkörpers 2 in Eingriff steht. Die konische Außenoberfläche 21 des Spreizkörpers 2 steht mit einer entsprechend ausgebildeten, d. h. ebenfalls konisch geformten Spreizfläche 31 in Flächenkontakt. Der außenliegende Endabschnitt der Spreizhülse 3 liegt an einer Radialschulter 12 des Gewinde-Zugbolzens 1 an, so daß die Spreizhülse 3 im vormontierten Zustand zwischen der Ringschulter 12 und dem Spreizkörper 2 in axialer Richtung positioniert ist. Die in Fig. 1 dargestellte Lage des Schwerlast-Metalldübels entspricht der Lage unmittelbar nach dem Eintreiben in das Mauerwerk 5, bevor der Gewinde-Zugbolzen 1 unter Zug gesetzt wird. In diesem Zustand liegt durch das Eintreiben bereits eine gewisse Verzahnung zwischen der Außenoberfläche der Spreizhülse 3 und der Innenoberfläche der Mauerwerkbohrung 4 vor. Der Gewinde-Zugbolzen 1 ist in dem in Fig. 1 dargestellten Ausführungsbeispiel als Schraube ausgebildet, die einen Schraubenkopf 13 besitzt, der mit einem zu befestigenden Gegenstand 6 in Anlagekontakt steht. Die vom Schraubenkopf 13 auf den Gegenstand 6 ausgeübte Befestigungskraft ist in dem in Fig. 1 dargestellten Montagezustand noch relativ klein.

Wenn der Gewinde-Zugbolzen 1 in der in Fig. 1 dargestellten Lage mittels eines geeigneten Werkzeugs gedreht wird, wird der Spreizkörper 2 langsam bedingt durch den Gewindeeingriff mit dem Gewinde-Zugbolzen in Richtung aus der Mauerwerkbohrung 4 heraus bewegt, vorausgesetzt, die Spreizhülse 3 dreht sich durch den Flächenkontakt der Kegelmantelflächen 21 und 31 nicht mit dem Spreizkörper 2 mit. Durch diese axiale Bewegung des Spreizkörpers 2 wird die Spreizhülse 3 vom inneren Ende her aufgeweitet und gelangt dadurch in immer größer werdenden Flächenpreßkontakt mit der Innenoberfläche der Mauerwerkbohrung 4. Dieser Flächenkontakt bestimmt die vom Schwerlast-Metalldübel letztlich übertragbare Zugkraft Z. Beim Einziehen des Spreizkörpers 2 in die Spreizhülse 3 sorgt die Ringschulter 12 zunächst auch dafür, daß die Spreizhülse 3 nicht in axialer Richtung verschoben wird.

Die vom Spreizkörper 2 auf die Innenoberfläche 31 der Spreizhülse 3 ausgeübte Radialkraft wird mit zunehmendem axialen Weg des Spreizkörpers 2 immer größer, wodurch auch die vom Schraubenkopf 13 auf den zu befestigenden Gegenstand 6 ausgeübte Haltekraft weiter ansteigt. Ab einer gewissen Kraftschwelle, d. h. in dem Moment, in dem die vom Schraubenkopf 13 auf den zu befestigenden Körper 6 ausgeübte Befestigungskraft einen vorbestimmten Schwellwert übersteigt, wird der Spreizkörper 2 nicht mehr weiter in die Spreizhülse 3 hineinbewegt, sondern die Ringschulter 12 wird durch den außen liegenden Endabschnitt der Spreizhülse 3 abgeschert, so daß in diesem Moment der Spreizkorper 2 als feststehende Mutter wirkt, in die der Gewinde-Zugbolzen 1 hineingeschraubt wird. Während dieses Montagevorgangs wird die endgültige Befestigungskraft auf den zu befestigenden Gegenstand übertragen, indem dem Gewinde-Zugbolzen 1 eine gewisse "Nachlaufstrecke" N zur Verfügung gestellt wird, die große genug gewählt werden kann, um alle Elastizitäten zwischen dem Schraubenkopf 13 und der Oberfläche des Mauerwerks 5 zu überwinden. Voraussetzung für die Schaffung der Nachlaufstrecke N ist die vollkommene Überwindung des zwischen Spreizhülse 3 und Gewinde-Zugbolzen 1 vorgesehenen Anschlags in Form der Ringschulter 12.

Für die zuverlässige Funktionsweise des in Fig. 1 dargestellten Schwerlast-Metalldübels ist es unbedingt erforderlich, daß bereits bei geringen axialen Kräften ein sofortiges Aufweiten der Spreizhülse 3 auftritt, daß sich die Spreizhülse 3 beim Anziehen des Spreizkörpers 2 nicht mitdreht, und daß die Ringschulter 12 bei einer vorbestimmten Befestigungskraft zuverlässig abgeschert wird. Die Fig. 2 bis 5 zeigen im einzelnen die für die zuverlässige Funktion des Schwerlast-Metalldübels ausschlaggebenden Einzelheiten des Schwerlast-Metalldübels, die darüberhinaus noch den Vorzug einer einfachen Herstellbarkeit besitzen.

Zunächst soll auf die Fig. 2, 3 und 5 näher eingegangen werden, die eine erste Ausführungsform der Spreizhülse 3 zeigen. Die Spreizhülse 3 besteht aus einem gerollten Blechmaterial 32, das in Fig. 3 in einer Abwicklung dargestellt ist. Die Fig. 3 ist lediglich eine Hälfte der symmetrisch ausgebildeten Spreizhülsenabwicklung gezeigt. In das Blechmaterial 32 sind axial verlaufende Schlitze 33 gestanzt, die sich über einen weiten Längenbereich der Spreizhülse 3 erstrecken. Die Schlitze 33 sind beinahe über die gesamte Länge sehr schmal, erweitern sich allerdings in ihrem der Ringschulter 12 zugewandten Endabschnitt Ω-förmig derart, daß in Umfangsrichtung sich relativ weit erstreckende Ausnehmungen 34 gebildet werden. Die Randabschnitte des Blechstreifens 32 weisen jeweils einen halben Schlitz 33 und eine halbe Ausnehmung 34 auf. Die Ausnehmungen 34 sind derart gestaltet, daß zwischen den Ausnehmungen 34 ein Materialsteg 35 relativ geringer Länge L stehen bleibt. Die Schlitze 33 und die Ausnehmungen 34 werden bevorzugterweise in den Blechstreifen 32 gestanzt. Dabei kann entweder vorher oder nachher in einem Umformprozeß die konische Innenoberfläche 31 hergestellt werden. Fig. 2 zeigt noch eine Besonderheit der Spreizhülse 3, die darin besteht, daß auch die Außenfläche der Spreizhülse 3 ebenfalls in einem Umformprozeß derart bearbeitet ist, daß eine ringförmige Mulde 36a entsteht, die dazu führt, daß Material des Blechstreifens 32 von der Außenseite zur Innenseite verdrängt wird, wodurch die konische Fläche 31 weiter nach innen gezogen werden kann. Die Ausnehmungen 34 sind so in den Blechstreifen 32 eingestanzt, daß sie nach dem Umformen des Blechstreifens 32 in eine zylindrische Form gleichmäßig über den Umfang der Spreizhülse 3 verteilt sind. Durch die Schlitze 33 und die Ausnehmungen 34 wird die Spreizhülse 3 somit in drei Funktionsbereiche unterteilt: In den innen liegenden Spreizabschnitt, in dem zwischen den Ausnehmungggen 34 liegenden Stegabschnitt 35 und in den außen liegenden Randbereich, der einen biegesteifen Bund 36 darstellt. Der Spreizabschnitt sorgt bedingt durch die sehr schmalen Schlitze 33 dafür, daß eine äußerst große Fläche für die Kraftübertragung der Spreizkraft vom Spreizkörper 2 auf die Mauerwerkbohrung 4 zur Verfügung gestellt wird. Der Stegabschnitt 35 bzw. die große Erstreckung der Ausnehmungen 34 in Umfangsrichtung sorgt dafür, daß der Biegewiderstand der einzelnen, zwischen den Schlitzen 33 liegenden Spreizsegmente beim Einziehen des Spreizkörpers 2 so klein wie möglich gehalten wird, und der Bund 36 erfüllt die Funktion eine stabile Struktur für das Abscheren der Ringschulter 12 sowie für den Rollvorgang der Spreizhülse zur Verfügung zu stellen.

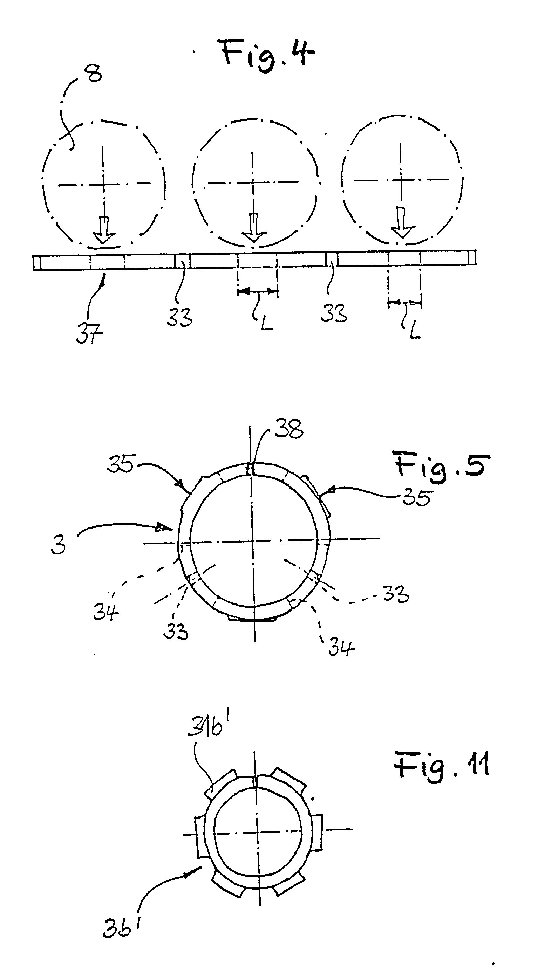

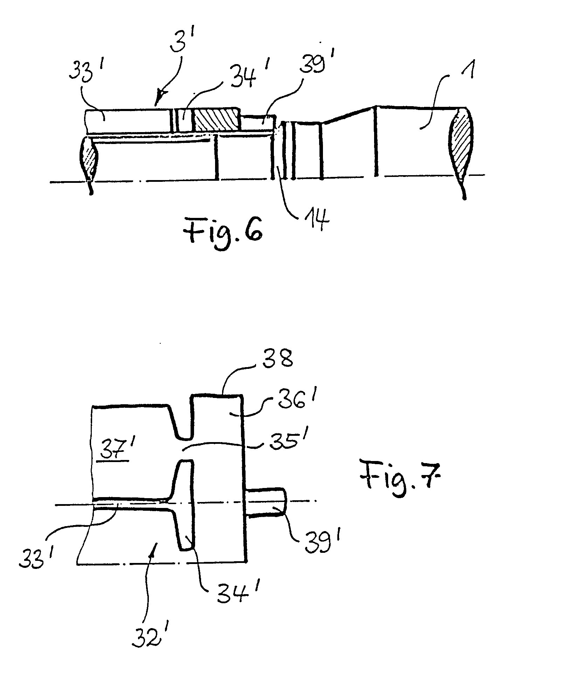

Bei der Herstellung der oben beschriberienen Spreizhülse 2 geht man am besten so vor, daß nach dem Einformen der Spreizkonusfläche 31, der Schlitze 33 und der Mulde 36 die zwischen den Schlitzen 33 liegenden Spreizsegmente 37 durch ein geeignetes Prägewerkzeug 8 (vgl. Fig. 4) in jeweils eine teilzylindrische Fläche gedrückt werilen. Das Prägewerkzeug 8 kann beispielsweise von einem Prägezylinder gebildet werden, dessen Außenkontur der Innenoberflächengestaltung der Spreizhülse 3 im fertigen Zustand entspricht. Das Prägewerkzeug 8 kann auch dazu dienen, die einzelnen Spreizkonusflächen 31 der Spreizsegmente 37 zu formen. Dabei ist es besonders bevorzugt, die einzelnen Spreizsegmente 37 nur in dem Bereich vorzuverformen, der zwischen den schmalen Schlitzen 33 liegt. Die Stegabschnitte 35 bleiben von dieser Verformung unbeeinflußt. Wenn dieser Umformungsprozeß abgeschlossen ist, wird der relativ biegesteige Bund 36 mit einem geeigneten Werkzeug in eine zylindrische Form gebracht bzw. gerollt. Auch diesem Umformvorgang wird der zwischen den Ausnehmungen 34 liegende Stegabschnitt 35 nicht unterzogen. Der Rollvorgang wird so ausgeführt, daß die seitlichen Randabschnitte 38 des Blechstreifens 32 aneinanderstoßen, so daß eine zwar geschlitzte, allerdings vollkommen zylindrische Spreizhülse 3 entsteht. In Fig. 5 ist eine Ansicht der Spreizhülse 3 nach dem Rollen gezeigt. Sowohl die Spreizsegmente 37 als auch der Bund 36 der Spreizhülse 3 weisen jeweils eine zylindrische Außen- und Innenkontur auf. Da allerdings der Stegabschnitt 35 zwischen den Ausnehmungen 34 weder durch das Prägewerkzeug 8 noch durch das Rollwerkzeug umgeformt wurde, ragt dieser über die Außenkontor der Spreizhülse 3 an mehreren Stellen hinaus, und kann somit beim Eintreiben mit dem Gewinde-Zugbolzen 1 zur sicheren Verzahnung mit der Mauerwerkbohrung 4 dienen.

Aus Fig. 2 ist ferner das Zusammenwirken der Spreizhülse 3 mit der Ringschulter 12 des Gewinde-Zugbolzens 1 zu entnehmen. Die Ringschulter 12, die geeigneterweise ebenfalls auf dem Wege der spanlosen Umformung hergestellt wird, steht in flächigem Anlagekontakt mit dem Bund 36 der Spreizhülse 3. Die Breite B der Ringschulter 12 ist zur Festlegung einer genau bestimmten Befestigungskraft geeignet gewählt. Auf der dem Schraubenkopf 13 zugewandten Seite geht die Ringschulter 12 wiederum in einem Bolzenabschnitt über, der über eine gewisse Nachlaufstrecke N hinweg einen Außendurchmesser besitzt, der kleiner ist als der Innendurchmesser der Spreizhülse 3. Aus Fig. 1 ist erkennbar, daß sich der Querschnitt des Gewinde-Zugbolzens 1 im Anschluß an den die Nachlaufstrecke N definierenden Bereich kleineren Durchmessers allmählich auf den Querschnitt der Mauerwerkbohrung 4 erweitert. Der Gewinde-Zugbolzen 1 hat somit in dem Bereich, in dem er aus dem Mauerwerk 5 herausragt, seine maximale Querschnittsfläche, wodurch das maximal übertragbare Biegemoment sowie die maximal übertragbare Querkraft Q angehoben werden kann.

In Fig. 6 ist eine weitere Ausführungsform des Schwerlast-Metalldübels dargestellt. Die dort gezeigte Spreizhülse 3' unterscheidet sich von der in den Fig. 2, 3 und 5 gezeigten Spreizhülse 3 lediglich in der Ausgestaltung des außenliegenden Endabschnitts. An den im wesentlichen wie in der bereits beschriebenen Ausführungsform ausgebildeten Bund 36' schließen sich drei über den Umfang der Spreizhülse 3 wiederum gleichmäßig verteilte biegsame Fortsätze 39' an, die im vormontierten Zustand des Schwerlast-Metalldübels in Anlagekontakt mit einer zur Spreizhülse 3 hin abfallenden Konusfläche 14 des Gewinde-Zugbolzens 1 stehen. Die biegsamen Fortsätze bzw. Endabschnitte 39' der Spreizhülse 3' sind wiederum auf dem Wege der spanlosen Formgebung hergestellt, indem zunächst der außen liegende Endabschnitt dünner ausgewalzt und anschließend dieser Bereich zwischen den Fortsätzen 39' ausgestanzt wird.

Beim Einsetzen bzw. Einschlagen des vormontierteni Schwerlast-Metalldübels bildet die Konusfläche 14 einen zuverlässigen Anschlag für die Spreizhülse 3' bzw. für die Fortsätze 39', so daß die Spreizhülse 3' beim Einziehen des Spreizkörpers 2 einen zuverlässigen Anschlag bildet. Wenn die vom Gewinde-Zugbolzen 1 entweder über den Schraubenkopf 13 oder über eine nicht dargestellte Spannmutter auf den zu befestigenden Gegenstand 6 ausgeübte Befestigungskraft den oben angesprochenen Schwellwert übersteigt, wirkt auf den Fortsatz 39' ein derart großes Biegemoment ein, daß dieser unter Biegeverformung über die Konusfläche 14 gleitet, wodurch der Anschlag vollkommen überwunden und die Nachlaufstrecke N zur Verfügung gesteilt wird. Von Bedeutung ist dabei, daß die Konusfläche 14 derart auf den Fortsatz 39' abgestimmt wird, daß sich dieser beim Aufbiegen nach außen nicht mit der Innenoberfläche der Mauerwerkbohrung 4 verhakt.

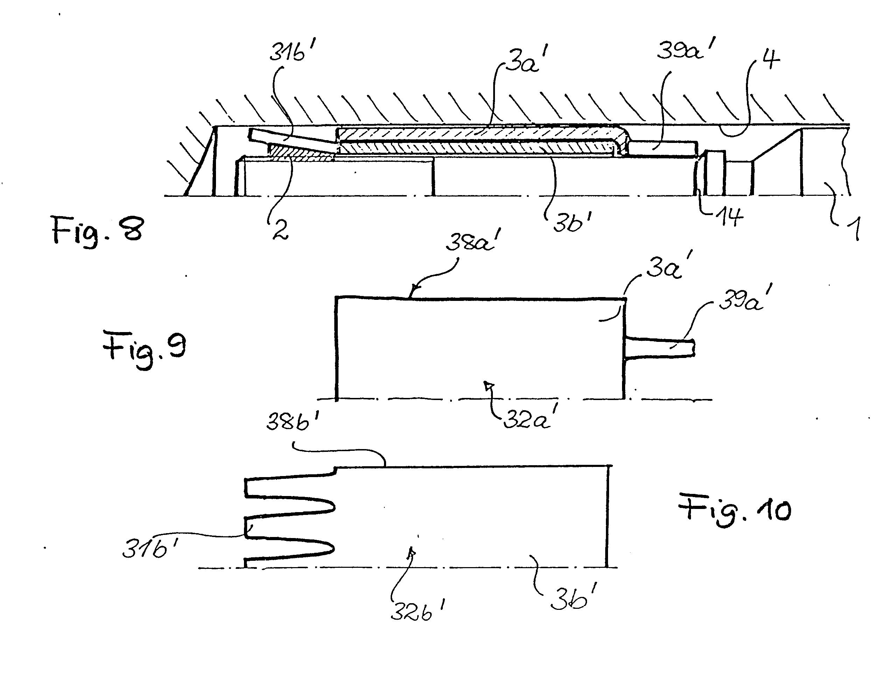

In den Fig. 8 bis 11 ist eine dritte Ausführungsform des Schwerlast-Metalldübels dargestellt. Auch in diesem Ausführungsbeispiel ist als Anschlag zwischen der Spreizhülse und dem Gewinde-Zugbolzen 1 eine ringförmig verlaufende Konusfläche 14 vorgesehen, die in Anlagekontakt mit dem außen liegenden Endabschnitt der Spreizhülse 3 steht. In Fig. 8 ist wiederum der Zustand hergestellt, den der Schwerlast-Metalldübel unmittelbar nach dem Einschlagen in die Mauerwerkbohrung 4 einnimmt. Die Spreizhülse besteht gemäß dieser Ausführungsform aus zwei Hülsenteilen 3a' und 3b', die jeweils aus einem in eine zylindrische Form gerollten Blechstreifen 32a' und 32b' hergestellt sind. Jedes Hülsenteil 3a' und 3b' besitzt somit eine in axialer Richtung durchgehende Trennkante 38a' und 38b'. Die Hülsenteile 3a' und 3b' sind derart gerollt, daß der Innendurchmesser der äußeren Hülse 3a' den Außendurchmesser der inneren Hülse 3b' im wesentlichen entspricht. Die Hülsenteile 3a' und 3b' weisen im wesentlichen die gleiche und eine weitestgehend gleichbleibende Wandstärke auf. Die äußere Hülse 3a' ist mit ihrem außen liegenden Endabschnitt radial nach innen gezogen und sie weist in diesem Bereich zwei sich diametral gegenüberliegende Anschlagzungen 39a' auf, die mit der Konusfläche 14 in Anlagekontakt stehen. In der Abwicklung aus Fig. 9 ist erkennbar, daß die Spreizhülse 3a' aus einem Blechstreifen 32a' herstellbar ist, wobei das Material zwischen den Haltezungen 39a' ausgestanzt ist. Der mit den Ausstanzungen versehene Blechstreifen 32a' wird dann nach dem nach innen Ziehen des außen liegenden Endabschnitts in die zylindrische Form gerollt.

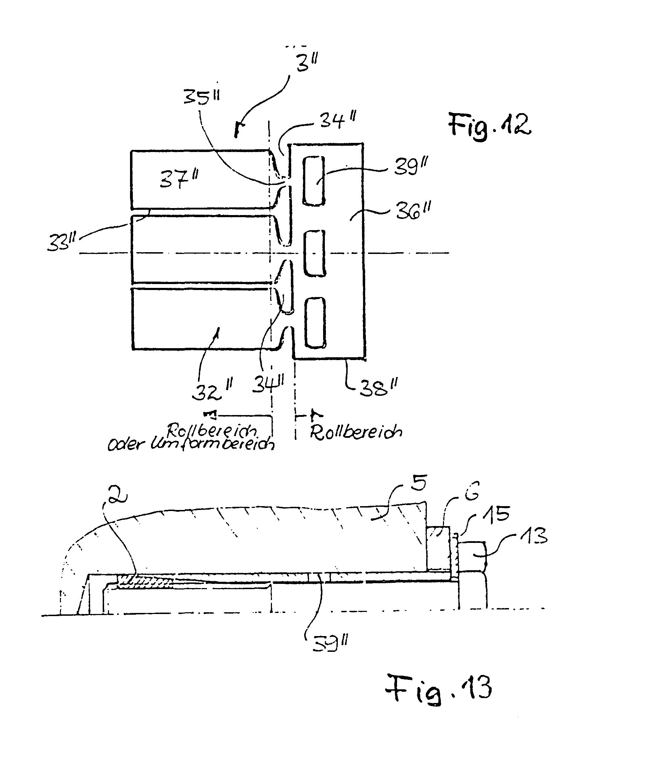

In Fig. 10 ist eine Hälfte der Abwicklung der inneren Spreizhülse 3b' dargestellt. Auch diese Spreizhülse besteht aus einem Blechstreifen 32b', der in seinem dem Spreizkörper 2 zugewandten Randbereich ebenfalls mit biegsamen Endabschnitte 31b' versehen ist. Die biegsamen Endabschnitte 31b', die auch als Spreizzungen bezeichnet werden können, entstehen wiederum durch Ausstanzen von Freiräumen zwischen den Spreizzungen 31b'.

Die endgültige Form der inneren Spreizhülse 3b' erhält man ebenfalls durch Rollen des Blechstreifens 32b'. Dabei wird das Rollwerkzeug am besten lediglich in dem von den Ausstanzungen nicht beeinflußten Bereich angesetzt. Entweder nach oder vor dem Rollvorgang spreizt man geeigneterweise die Spreizzungen 31b' um ein gewisses Maß nach außen, so daß sich die in Fig. 11 dargestellte Form ergibt. Weil die Spreizzungen 31b' nicht vom Rollwerkzeug beeinflußt sind, besitzen sie ebene und scharfkantige Außenkonturen, die sich beim Einschlagen des vormontierten Schwerlast-Metalldübels - wie aus Fig. 8 erkennbar - mit der Mauerwerkbohrung 4 verzahnen bzw. verkrallen können.

Wenn der in Fig. 8 dargestellte Gewinde-Zugbolzen 1 gedreht wird, werden zunächst die Spreizzungen 31b' fest in die Mauerwerkbohrung. 4 eingedrückt, wobei sich bedingt durch den durchgehenden Trennungschlitz zwischen den Trennlinien 38b' bereits ein gewisser Aufweitvorgang der inneren Hülse 3b' ergibt. Es wird auf diese Weise zuverlässig dafür gesorgt, daß sich die Hülsen 3a' und 3b' beim Einziehen des Spreizkörpers 2 nicht mitdrehen.

Der Spreizkörper 2 wird immer weiter in die Innenhülse 3b' eingezogen, so daß sich die Innenhülse 3b' immer mehr aufweitet. Weil auch die äußere Hülse 3a' über die gesamte Länge geschlitzt ist, überträgt sich dieser Aufweitvorgang auch auf die äußere Hülse 3a', durch die dann die Spreizkraft auf die Mauerwerkbohrung 4 übertragen wird. Wenn die Spreizkraft eine gewisse Größenordnung erreicht und die Befestigungskraft dabei einen vorbestimmten Wert überschreitet, gleiten die Endabschnitte 39' der äußeren Hülse 3a' unter Biegeverformung über die Konusfläche 14, deren Anschlagwirkung auf diese Weise vollkommen aufgehoben wird. Nun kann der Gewinde-Zugbolzen 1 unter Überwindung der Elastizitäten zwischen dem Schraubenkopf und der Mauerwerkoberfläche fest in das Gewinde des Spreizkörpers 2 geschraubt werden.

In der vorstehenden Figurenbeschreibung sind lediglich bevorzugte Ausführungsformen des Schwerlast-Metalldübels beschrieben. Es fallen jedoch auch Abwandlungen dieser Ausführungsformen in den Rahmen der Erfindung. So muß die Ringschulter 12 bzw. die Konusfläche 14 nicht unbedingt umlaufend und geschlossen ausgebildet sein. Darüberhinaus muß sie auch nichtunbedingt auf dem Wege der spanlosen Formgebung hergeseilt sein. Der Gewinde-Zugbolzen 1 braucht ferner nicht unbedingt einen Schraubenkopf 13 zu tragen. Der Rahmen der Erfindung deckt auch den Fall ab, daß der Gewinde-Zugbolzen 1 auf der außen liegenden Seite des von der Ringschulter bzw. von der Konusfläche gebildeten Anschlags in einen Gewindebolzen übergeht, der am außen liegenden Stirnende einen Einschnitt für den Eingriff eines Schraubendrehers besitzt und auf den ein Spannmutter geschraubt ist, die in Anlagekontakt mit einem zu befestigenden Gegenstand steht. Durch Drehen der Spannmutter wird dann der Gewinde-Zugbolzen zusammen mit dem Spreizkörper solange nach außen gezogen, bis die auf den Anschlag einwirkende Kraft größer als eine vorgegebene Befestigungs-Schwellkraft wird. Der Anschlag wird dann vollkommen überwunden und die Spannmutter wird gegen den zu befestigenden Gegenstand gepreßt.

Fig. 3 zeigt eine Abwicklung einer weiteren Ausführungsform einer Spreizhülse, die ebenfalls im Sinne der oben dargelegten Zusammenhänge mit einem entsprechend ausgebildeten Gewinde-Zugbolzen und einem darauf geschraubten Spreizkörper zusammenwirken kann. Die in Fig. 2 dargestellte Spreizhülse 3″ ist in dem in in der Mauerwerkausnehmung innen zu liegen kommenden Bereich ebenso ausgebildet, wie die in Fig. 3 dargestellte Spreizhülse 3, so daß auf die im Bereich der Spreizsegmente liegenden Abschnitte, die mit gleichen Bezugszeichen gekennzeichnet sind, nicht mehr näher eingegangen wird. Man erkennt, daß auch die in Fig. 2 dargestellte Spreizhülse 3″ aus einem dünnen Blechmaterial hergestellt werden kann, die dann zu der fertigen Hülse durch Rollen des Bundabschnitts 36″ fertiggestellt wird. Der Bundabschnitt 36″ unterscheidet sich von dem in Fig. 3 dargestellten Bundabschnitt 36 im wesentlichen dadurch, daß er eine Vielzahl von in Umfangsrichtung in vorbestimmtem bzw. in definiertem Abstand stehende Durchbrüche 39″ aufweist. Die Durchbrüche 39″ sind beispielsweise ebenfalls in das Blechmaterial gestanzt und bevorzugterweise so angeordnet, daß sie zu den Ω-förmigen Ausnehmungen 34″ versetzt angeordnet sind. Auf diese Weise wird eine Spreizhülse 3″ geschaffen, bei der hinter jedem Stegabschnitt 35″ ein Durchbruch 39″ ausgebildet ist. Die axiale Erstreckung der Durchbrüche 39″ ist so bestimmt, daß bei Einwirkung einer in axialer Richtung wirkenden Druckkraft, die über einem bestimmten Schwellwert liegt, der Bundabschnitt 36″ auf den Spreizabschnitt zu verschoben wird, indem die durch die Durchbrüche 39″ geschaffene Material-Schwachzone ausknickt und dadurch die oben angesprochene und für die Funktionsweise des Schwerlast-Metalldübels notwendige Nachlaufstrecke gewährleistet. Die Erstreckung der Durchbrüche 39″ in Umfangsrichtung und damit auch der zwischen den Durchbrüchen 39″ verbleibende Bundbereich wird geeigneterweise optimiert, damit unter allen Umständen und auch dann, wenn die Spreizhülse fest in die Mauerwerkbohrung eingetrieben ist, ein Ausknicken der Material-Schwachzone stattfindet. Durch die Orientierung der Durchbrüche 39″ in Umfangsrichtung wird sichergestellt, daß der Bundabschnitt 36″ auch mit den Durchbrüchen 39″ sicher gerollt werden kann, so daß die Spreizhülse gemäß Fig. 13 ebenso wirtschaftlich hergestellt werden kann wie die vorstehend beschriebenen Ausführungsformen. Weil das Rollwerkzeug - wie Fig. 12 andeutet - nicht in den Bereich der Ω-förmigen Ausnehmungen 34″ eingreift, wird auch bei der Herstellung der in Fig. 12 gezeigten Spreizhülse 3″ sichergestellt, daß der nicht gerollte Stegabschnitt 35″ über das Außenmaß der fertig gerollten Spreizhülse 3″ ragt, damit die oben angesprochene Verzahnungswirkung auftreten kann.

Die in Fig. 12 dargestellte Spreizhülse 3″ erfüllt die vorstehend beschriebenen Funktionen auch dann, wenn der auf dem Gewinde-Zugbolzen ausgebildete Anschlag von einer reinen Radialschulter gebildet wird. Es kann allerdings auch vorgesehen sein, den Anschlag auf der der Spreizhülse 3″ zugewandten Seite derart zu formen, daß er die Spreizhülse 3″ nicht nur in axialer Richtung sondern zusätzlich noch in radialer Richtung beaufschlagt, so daß das Ausknicken der Material-Schwachzonen im Bereich des Bundes 36″ zusätzlich unterstützt wird.

Wenn man den Spreizhülsenbund 36″ gemäß Fig. 12 in axialer Richtung verlängert, gelangt man zu der in Fig. 13 dargestellten Ausführungsform der Schwerlast-Metalldübels, die sich insbesondere durch geringe Herstellungskosten auszeichnet. Durch das Nachaußenführen des Spreizhülsenbundes 36″ aus dem Mauerwerk 5 eröffnet sich nämlich die Möglichkeit, die bei einer Normschraube durch den Schraubenkopf 13 bereits vorliegende Radialfläche bzw. - wenn man eine Gewindestange mit Spannmutter verwendet - die Radialfläche der Spannmutter bzw. die daran anliegende Unterlegscheibe als Anschlag für die Spreizhülse 3′ zu verwenden. Fig. 13 zeigt diese Ausführungsform des Schwerlast-Metalldübels, wobei eine Normschraube mit einem Schraubenkopf 13 Verwendung findet, die sich über eine Beilagscheibe 15 am zu befestigenden Gegenstand 6 abstützt. Man erkennt in Fig. 13 die Durchbrüche 39″, die im Zusammenwirken mit den Ω-förmigen Ausnehmungen 34″ die oben angesprochenen Material-Schwachzonen ausbilden. Der in Fig. 13 bezüglich der Durchbrüche 39″ links liegende Bereich der Spreizhülse 3″ kann wiederum so ausgebildet sein, wie dies in Fig. 12 dargestellt ist. Anstatt der in Fig. 12 dargestellten einen Reihe der Durchbrüche 39″ können auch mehrere in Axialrichtung gestaffelte Reihen dieser Durchbrüche 39″ ausgebildet sein. Entscheidend ist, daß die Material-Schwachzonen die Formsteifigkeit der Spreizhülse 3″ derart prägen, daß zwar der Spreizkörper 2 zunächst zuverlässig in die Spreizsegmente 37″ eingezogen werden kann, daß bei Überschreiten einer gewissen Zugkraftschwelle allerdings der Knautscheffekt der Material-Schwachzonen 39″ und 35″ voll zum Tragen kommt.

Die vorstehend angesprochenen, der Ω-Form ähnlichen Ausnehmungen sind besonders wirkungsvoll wenn sie in axialer Richtung eine relativ kleine und in Umfangsrichtung eine relativ große Erstreckung haben.

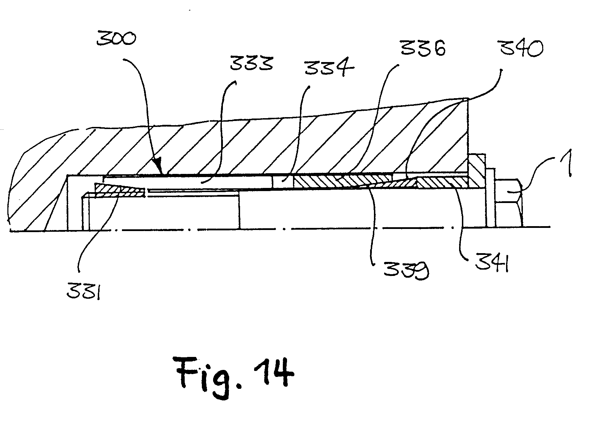

Fig. 14 zeigt eine weitere Ausführungsform des Schwerlast-Metalldübels die vorzugsweise dann Anwendung findet, wenn ein Mauerwerk vorliegt, das mit sehr genauen und maßhaltigen Dübelausnehmungen versehen werden kann. Die bei dieser Ausführungsform verwendete Spreizhülse 300 besitzt im wesentlichen dieselbe Formgebung und denselben Aufbau wie die in den Fig. 1 bis 5 gezeigte Spreizhülse 3, d.h. sie besteht vorzugsweise aus einem gerollten Blechstreifen in den Schlitze 333 und Ausnehmungen 334 gestanzt sind, die sich in Umfangsrichtung relativ weit erstrecken, so daß der Biegewiederstand der einzelnen, zwischen den Schlitzen 333 liegenden Spreizsegmente relativ klein wird. Ferner ist in weiterer Übereinstimmung mit der Ausführungsform gemäß Fig. 1 bis 5 ein verhältnismäßig biegesteifer Bund 336 vorgesehen, in dessen Bereich zur Herstellung der Spreizhülse der Rollvorgang durchgeführt wird. Wie auch bei der Ausführungsform gemäß Fig. 1 bis 5 können die zwischen den Schlitzen 333 liegenden Abschnitte jeweils im Bereich vor der Ω-förmigen Ausnehmung 334 so in eine Zylindermantel-Teilfläche umgeformt sein, daß sie nach dem Rollvorgang des Hülsenbundes 336 einen im wesentlichen regelmäßigen Zylinder bilden.

Es hat sich gezeigt, daß diese Spreizhülsengestaltung optimale Bedingungen für einen mit geringen Gegenkräften durchführbaren Aufspreizvorgang bereitstellt und dennoch stabil genug ist, um den hohen Druck- und Zugbeanspruchungen standhalten zu können. Die Weiterbildung der Fig. 14 macht von der Erkenntnis Gebrauch, daß die gerollte Spreizhülse trotz ihrer hohen Druck- und Biegestabilität des Hülsenbundes 336 verhältnismäßig, leicht radial aufweitbar ist. Dies eröffnet die Möglichkeit, die oben angesprochene und für die Montage eines an das Mauerwerk fest anzuklemmenden Gegenstands erforderliche ausreichende Nachlaufstrecke durch diese radiale Verformung des Bundes bereitzustellen, was zumal dann mit Sicherheit gewährleistet ist, wenn der Schwerlast-Metalldübel in einem Mauerwerk eingesetzt wird, in das sehr maßhaltige Dübelbohrungen eingearbeitet werden können. Zu diesem Zweck unterscheidet sich die Spreizhülse 300 von der Spreizhülse 3 gemäß Fig. 1 bis 5 in einer weiteren konischen Innenoberfläche 339 des Hülsenbundes 336, die, ebenso wie die andere randseitige Konusinnenoberfläche 331 vor oder nach dem Rollvorgang in die Hülse eingeformt wird. Die konische Innenoberfläche 339 wird mit einer zur Spreizhülse 300 hin abfallenden Spreizkonusfläche 340 zusammen, die sich über eine Distanzhülse 341 am Gewinde-Zugbolzen 1 abstützt und damit Bestandteil der Druckkörpereinrichtung ist, über die bei eingezogenem Spreizkörper ein Teil der Befestigungskraft auf die Spreizhülse übertragen wird.

Der mit geringen Kräften aufweitbare Innenkonus 339 der Spreizhülse 300 bildet im Zusammenwirken mit der Spreizkonusfläche 340 beim Aufspeizen der Hülse einen im wesentlichen ortsfesten Anschlag für die Spreizhülse, denn die Hülsensegmente weiten sich durch die Formgebung der Schlitze 333 und Ausnehmungen 334 bereits bei geringsten Axialkräften des konischen innenliegenden Spreizkörpers zuverlässig auf. Erst in der zweiten Befestigungsphase des Schwerlast-Metalldübels wird dieser Anschlag durch Einwirkung der außenliegenden Spreizkonusfläche 340 vollkommen überwunden, indem die Rollnaht der Spreizhülse 300 aufgeweitet wird. Durch geeignete Wahl der Konizität der Innenkonusfläche 339 kann die sich beim Aufweitvorgang der Spreizhülse 300 ergebende Nachlaufstrecke in weiten Grenzen variiert und dementsprechend auch ausreichend groß gehalten werden.

Wie auch bei der Ausführungform in Fig. 2 gezeigt, kann auch die in Fig. 14 gezeigte Spreizhülse 300 im Bereich der randseitigen Konusflächen 331 bzw. 339 an der Außenseite mit (in Fig. 14 nicht einzeln dargestellten) ringförmigen Mulden versehen sein, die dazu führen, das Material des Blechstreifens von der Außenseite zur Innenseite verdrängt wird, wodurch die konischen Flächen 331 bzw. 339 weiter nach innen gezogen werden können.

Die Erfindung schafft somit einen Schwerlast-Metalldübel insbesondere für hochfestes Mauerwerk oder Beton. Der Dübel besitzt einen aus dem Mauerwerk ragenden Gewinde-Zugbolzen, der mit einem konischen Spreizkörper in Verbindung steht, eine geschlitzte, auf den innenliegenden Teil des Gewindebolzens geschobene Spreizhülse mit einem im Mauerwerk innenliegenden Spreizflächenabschnitt in den der Spreizkörper unter Zugbeaufschlagung des Zugbolzens einziehbar ist, und eine mit dem äußeren Ende der Spreizhülse in Anlagekontakt stehende Druckkörpereinrichtung, über die bei eingezogenem Spreizkörper ein Teil der Befestigungskraft auf die Spreizhülse übertragbar ist. Die Druckkörpereinrichtung wird von einem an den Gewinde-Zugbolzen angesetzten Anschlag gebildet, der bei Einwirkung einer vorbestimmten Befestigungskraft durch eigene und/oder durch Verformung der Spreizhülse vollkommen überwindbar ist. Damit ergibt sich ein Schwerlast-Metalldübel, der sich durch eine vereinfachte Montage und durch eine höhere Tragkraft auszeichnet, wobei er gleichzeitig die Möglichkeit einer wirtschaftlicheren Herstellung eröffnet.

**Patentansprüche**

1. Schwerlast-Metalldübel, insbesondere für hochfestes Mauerwerk (5) oder Beton, mit einem aus der Mauerwerk ragenden Gewinde-Zugbolzen (1), der mit einem konischen Spreizkörper (2) in Verbindung steht, einer zusammenhängenden, geschlitzten, auf den innenliegenden Teil des Zugbolzens geschobenen Spreizhülse (3) mit einem im Mauerwerk innenliegenden Spreizflächenabschnitt, in den der Spreizkörper unter Zugbeaufschlagung des Zugbolzens einziehbar ist, und einer mit dem äußeren Ende der Spreizhülse in Anlagekontakt stehenden Druckkörpereinrichtung, über die bei eingezogenem Spreizkörper ein Teil der Befestigungskraft auf die Spreizhülse übertragbar ist, wobei die Druckkörpereinrichtung von einem Anschlagkörper (12) gebildet ist, dessen Anschlagfunktion bei Einwirkung einer bestimmten Befestigungskraft aufhebbar ist, dadurch gekennzeichnet, daß der Anschlagkörper von einer Radialschulter (12) des Zugbolzens (1) gebildet ist, die durch die Spreizhülse (3) abscherbar ist.

2. Schwerlast-Metalldübel nach Anspruch 1, dadurch gekennzeichnet, daß die Radialschulter (12) aus mehreren im Umfang beispielsweise gleichmäßig verteilt angeordneten Radialschulterabschnitten gebildet ist.

3. Schwerlast-Metalldübel nach Anspruch 1 oder 2, dadurch gekennzeichnet, daß die Radialschulter (12) von einer in den Zugbolzen (1) gerollten Ringschulter gebildet ist.

4. Schwerlast-Metalldübel, insbesondere für hochfestes Mauerwerk (5) oder Beton, mit einem aus dem Mauerwerk ragenden Gewinde-Zugbolzen (1), der mit einem konischen Spreizkörper (2) in Verbindung steht, einer zusammenhängenden, geschlitzten, auf den innenliegenden Teil des Zugbolzens geschobenen Spreizhülse (3', 3a') mit einem im Mauerwerk innenliegenden Spreizflächenabschnitt, in den der Spreizkörper unter Zugbeaufschlagung des Zugbolzens einziehbar ist, und einer mit dem äußeren Ende der Spreizhülse in Anlagekontakt stehenden Druckkörpereinrichtung, über die bei eingezogenem Spreizkörper ein Teil der Befestigungskraft auf die Spreizhülse übertragbar ist, wobei die Druckkörpereinrichtung von einem Anschlagkörper (14) gebildet ist, dessen Anschlagfunktion bei Einwirkung einer bestimmten Befestigungskraft aufhebbar ist, dadurch gekennzeichnet, daß der Anschlagkörper von einer zur Spreizhülse (3'; 3a') abfallenden Konusfläche (14) des Zugbolzens gebildet ist, über die biegsam ausgebildete Endabschnitte (39'; 39a') der Spreizhülse (3'; 3a') hinwegschiebbar sind.

5. Schwerlast-Metalldübel nach Anspruch 4, dadurch gekennzeichnet, daß die Konusfläche (14) von einer in den Zugbolzen (1) gerollten Fläche gebildet ist.

6. Schwerlast-Metalldübel nach einem der Ansprüche 1 bis 5, dadurch gekennzeichnet, daß der Querschnitt des Gewinde-Zugbolzens (1) auf der der Mauerwerköffnung zugewandten Seite der Radialschulter (12) bzw. Konusfläche (14) auf den Außendurchmesser der Spreizhülse (3, 3a') erweitert ist, und daß zwischen der Radialschulter (12) bzw. Konusfläche (14) und dieser Querschnittserweiterung eine definierte Strecke (N) liegt, in der der Außendurchmesser des Zugbolzens (1) kleiner ist als der Innendurchmesser der Spreizhülse (3, 3a'').

7. Schwerlast-Metalldübel nach einem der Ansprüche 1 bis 6, dadurch gekennzeichnet, daß die Spreizhülse (3; 3') im innenliegenden, d.h. dem Spreizkörper (2) zugewandten Bereich mehrfach geschlitzt und im außenliegenden Bereich mit einem biegesteifen Bund (36; 36') versehen ist.

8. Schwerlast-Metalldübel nach Anspruch 7, dadurch gekennzeichnet, daß sich die Schlitze (33; 33') über zumindest 2/3 der Gesamtlänge der Spreizhülse (3; 3') erstrecken, im innenliegenden Bereich relativ schmal sind und sich vor dem Bund (36; 36') in Ω-förmige Ausnehmungen (34; 34') erweitern.

9. Schwer-Metalldübel nach Anspruch 7 oder 8, dadurch gekennzeichnet, daß die Spreizhülse aus einem gerollten Blechstreifen (32; 32') besteht, in die die Schlitze (33; 33') und Ausnehmungen (34; 34') gestanzt sind.

10. Schwerlast-Metalldübel nach Anspruch 9, dadurch gekennzeichnet, daß die Spreizhülse (3; 3') lediglich im Bereich des biegesteifen Bundes (36; 36') gerollt ist und die zwischen den Schlitzen (33; 33') liegenden Abschnitte (37; 37') jeweils im Bereich vor der Ω-förmigen Ausnehmung (34; 34') derart in eine Zylindermantel-Teilfläche umgeformt sind, daß sie nach dem Rollvorgang des Bundes (36; 36') einen im wesentlichen regelmäßigen Zylinder bilden.

11. Schwerlast-Metalldübel nach einem der Ansprüche 4 bis 10, dadurch gekennzeichnet, daß die Spreizhülse (3') im dem Spreizkörper (2) zugewandten Bereich mehrfach geschlitzt und im der Mauerwerköffnung zugewandten Randbereich mit einem biegesteifen Bund (36') versehen ist, an den sich zumindest zwei, über den Umfang gleichmäßig verteilte biegsame Anschlag-Fortsätze (39') anschließen.

12. Schwerlast-Metalldübel nach Anspruch 11, dadurch gekennzeichnet, daß die Spreizhülse (3') aus einem gerollten Blechstreifen (32') besteht, in den die Schlitze (33'), die Ausnehmungen (34') und Freiräume zwischen den Anschlag-Fortsätzen (39') gestanzt sind.

13. Schwerlast-Metalldübel nach einem der Ansprüche 4 bis 12, dadurch gekennzeichnet, daß die Spreizhülse aus zwei konzentrischen, längsgeschlitzten Hülsenteilen (3a', 3b') besteht, von denen die innere (3b') in dem dem Spreizkörper (2) zugewandten Endbereich und die äußere (3a') in dem der Konusfläche (14) zugewandten Endbereich jeweils mit Ausnehmungen versehen ist, um jeweils biegsame Endabschnitte (31b' bzw. 39a') auszubilden.

14. Schwerlast-Metalldübel nach Anspruch 13, dadurch gekennzeichnet, daß die Hülsenteile (3a', 3b') gleichmäßige Wandstärke besitzen und jeweils aus gerollten Blechstreifen (32a', 32b') bestehen, in die die jeweiligen Ausnehmungen gestanzt sind.

15. Schwerlast-Metalldübel nach Anspruch 13 oder 14, dadurch gekennzeichnet, daß der äußere Hülsenteil (3a') im Bereich der biegsamen Endabschnitte (39a') einen Innendurchmesser aufweist, der im wesentlichen dem Innendurchmesser des inneren Hülsenteils ( 3b') entspricht und der Außendurchmesser des äußeren Hülsenteils (3a') im entspannten Zustand im wesentlichen dem Außendurchmesser des Spreizkörpers (2) entspricht.

16. Schwerlast-Metalldübel nach einem der Ansprüche 13 bis 16, dadurch gekennzeichnet, daß das innere Hülsenteil (3b') mindestens vier biegsame Endabschnitte (31b') besitzt und lediglich außerhalb des die Endabschnitte aufweisenden Bereichs in eine zylindrische Form gerollt ist.

17. Schwerlast-Metalldübel, insbesondere für hochfestes Mauerwerk (5) oder Beton, mit einem aus dem Mauerwerk ragenden Gewinde-Zugbolzen (1), der mit einem konischen Spreizkörper (2) in Verbindung steht, einer zusammenhängenden, geschlitzten, auf den innenliegenden Teil des Zugbolzens geschobenen Spreizhülse (3'') mit einem im Mauerwerk innenliegenden Spreizflächenabschnitt, in den der Spreizkörper unter Zugbeaufschlagung des Zugbolzens einziehbar ist, und einer mit dem äußeren Ende der Spreizhülse in Anlagekontakt stehenden Druckkörpereinrichtung, über die bei eingezogenem Spreizkörper ein Teil der Befestigungskraft auf die Spreizhülse übertragbar ist, wobei die Druckkörpereinrichtung von einem Anschlagkörper gebildet ist, dessen Anschlagfunktion bei Einwirkung einer bestimmten Befestigungskraft aufhebbar ist und zu diesem Zweck der Anschlagkörper von einer mit dem Gewinde-Zugbolzen fest verbundenen Radialschulter (13) gebildet ist und die Spreizhülse auf der der Radialschulter zugewandten Seite in axialer Richtung einknickbare Material-Schwachzonen aufweist, die von in Umfangsrichtung orientierten Durchbrüchen (39'') zwischen einem mit Längsschlitzen (33'') versehenen Bereich und einem biegesteifen Bund (36'') gebildet sind, dadurch gekennzeichnet, daß sich die Längsschlitze (33'') über zumindest 2/3 der Gesamtlänge der Spreizhülse (3'') erstrecken, im dem Spreizkörper (2) zugewandten Bereich relativ schmal sind und sich vor dem Bund (36'') in Ω-förmige Ausnehmungen (34'') erweitern, und daß die Durchbrüche (39'') in Umfangsrichtung zu den Ω-förmigen Ausnehmungen (34'') versetzt angeordnet sind.

18. Schwerlast-Metalldübel nach Anspruch 17, dadurch gekennzeichnet, daß die Radialschulter auf der der Spreizhülse (3'') zugewandten Seite mit Flächenabschnitten versehen ist, die die Spreizhülse (3'') entweder mit einem zusätzlichen Biegemoment oder an genau definierten Punkten entlang des Umfangs mit gezielten Druckkräften beaufschlagen.

19. Schwerlast-Metalldübel nach Anspruch 17 oder 18, dadurch gekennzeichnet daß die Spreizhülse (3'') aus einem gerollten Blechstreifen besteht, in den die Schlitze (33''), die Ausnehmungen (34'') und die Durchbrüche (39'') gestanzt sind.

20. Schwerlast-Metalldübel nach einem der Anspruche 17 bis 19, dadurch gekennzeichnet, daß die Radialschulter außerhalb des zu befestigenden Gegenstands (6) liegt, wobei sie entweder vom Schraubenkopf (13) einer Normschraube oder von einer auf eine Gewindestange aufgeschraubten Spannmutter gebildet ist.

21. Schwerlast-Metalldübel, insbesondere für hochfestes Mauerwerk (5) oder Beton mit einem aus dem Mauerwerk ragenden Gewinde-Zugbolzen (1), der mit einem konischen Spreizkörper (2) in Verbindung steht, einer zusammenhängenden, geschlitzten, auf den innenliegenden Teil des Zugbolzens geschobenen Spreizhülse (300) mit einem im Mauerwerk innenliegenden Spreizflächenabschnitt, in den der Spreizkörper unter Zugbeaufschlagung des Zugbolzen einziehbar ist, und einer mit dem äußeren Ende der Spreizhülse in Anlagekontakt stehenden Druckkörpereinrichtung, über die bei eingezogenem Spreizkörper ein Teil der Befestigungskraft auf die Spreizhülse übertragbar ist, wobei die Druckkörpereinrichtung von einem als zur Spreizhülse hin abfallenden Spreizkonus (340) ausgebildeten Anschlagkörper gebildet ist, dessen Anschlagfunktion bei Einwirkung einer bestimmten Befestigungfkraft aufhebbar ist, wobei die Spreizhülse (300) im innenliegenden, d.h. dem Spreizkörper (2) zugewandten Bereich mehrfach geschlitzt und im außenliegenden Bereich mit einem biegesteifen Bund (336) versehen ist, dadurch gekennzeichnet, daß sich die Schlitze (333) über zumindest 2/3 der Gesamtlänge der Spreizhülse (300) erstrecken, im innenliegenden Bereich relativ schmal sind und sich vor dem Bund (336) in Ω-förmige Ausnehmungen (334) erweitern, und daß die Spreizhülse aus einem gerollten Blechstreifen besteht, in den die Schlitze (333) und Ausnehmungen (334) gestanzt sind, wobei eine dem Spreizkonus (340) zugewandte und mit diesem zusammenwirkende randseitige Innenkonusfläche (339) in den Blechstreifen eingeformt ist.

**Claims**

1. Heavy duty metal dowel, in particular for high-strength masonry (5) or concrete, comprising a threaded tie bolt (1) protruding from the masonry, which is in connection with a conical expansion body (2), a coherent, slotted expansion sleeve (3) slipped over the inner portion of the tie bolt and having an internal expansion surface portion in the masonry, into which the expansion body can be retracted by applying tension on the tie bolt, and comprising a compression member means which is in abutting contact with the outer end of the expansion sleeve, and through which a part of the mounting force can be transferred to the expansion sleeve, when the expansion body is retracted, with the compression member means being formed by a stop member (12) whose stopping function can be eliminated under the influence of a certain mounting force, characterized in that the stop member is formed by a radial shoulder (12) of the tie bolt (1), which can be sheared off by the expansion sleeve (3).

2. Heavy duty metal dowel in accordance with claim 1, characterized in that the radial shoulder (12) is formed by a plurality of radial shoulder portions which are for instance uniformly distributed over the circumference.

3. Heavy duty metal dowel in accordance with claim 1 or 2, characterized in that the radial shoulder (12) is formed by an annular shoulder rolled into the tie bolt (1).

4. Heavy duty metal dowel, in particular for high-strength masonry (5) or concrete, comprising a threaded tie bolt (1) protruding from the masonry, which is in connection with a conical expansion body (2), a coherent, slotted expansion sleeve (3', 3a') slipped over the inner portion of the tie bolt and having an internal expansion surface portion in the masonry, into which the expansion body can be retracted by applying tension on the tie bolt, and comprising a compression member means which is in abutting contact with the outer end of the expansion sleeve, and through which a part of the mounting force can be transferred to the expansion sleeve when the expansion body is retracted, with the compression member means being formed by a stop member (14) whose stopping function can be eliminated under the influence of a certain mounting force, characterised in that the stop member is formed by a conical surface (14) of the tie bolt which is inclined towards the expansion sleeve (3'; 3a'), and along which flexibly designed end portions (39'; 39a') of the expansion sleeve (3'; 3a') can be moved.

5. Heavy duty metal dowel in accordance with claim 4, characterized in that the conical surface (14) is formed by a surface rolled into the tie bolt (1).

6. Heavy duty metal dowel in accordance with one of claims 1 to 5, characterized in that the cross-section of the threaded tie bolt (1) is expanded on the side of the radial shoulder (12) and the conical surface (14) facing the masonry aperture to have the outer diameter of the expansion sleeve (3'; 3a'), and that between the radial shoulder (12) and the conical surface (14) and said expansion of the cross-section there is a defined section (N), where the outer diameter of the tie bolt (1) is smaller than the inner diameter of the expansion sleeve (3'; 3a').

7. Heavy duty metal dowel in accordance with one of claims 1 to 6, characterized in that the expansion sleeve (3; 3') is provided with a plurality of slots in the internal portion, i.e. the portion facing the expansion body (2), and is provided with a rigid collar (36; 36') in the external portion.

8. Heavy duty metal dowel in accordance with claim 7, characterized in that the slots (33; 33') extend over at least 2/3 of the entire length of the expansion sleeve (3; 3'), are relatively narrow in the internal portion, and extend before the collar (36; 36') into Ω-shaped recesses (34; 34').

9. Heavy duty metal dowel in accordance with claim 7 or 8, characterized in that the expansion sleeve consists of a rolled sheet metal strip (32; 32') into which the slots (33; 33') and recesses (34; 34') are punched.

10. Heavy duty metal dowel in accordance with claim 9, characterized in that the expansion sleeve (3; 3') is merely rolled in the area of the rigid collar (36; 36'), and that the portions (37; 37') located between the slots (33; 33') are each modified in the area before the Ω-shaped recess (34; 34') to form a partial cylinder surface, so that after the rolling process of the collar (36; 36') they form a substantially regular cylinder.

11. Heavy duty metal dowel in accordance with one of claims 4 to 10, characterized in that the expansion sleeve (3') is provided with a plurality of slots in the area facing the expansion body (2), and is provided with a rigid collar (36') in the edge portion facing the masonry aperture, to which collar are connected at least two flexible stop projections (39') which are uniformly distributed over the circumference.

12. Heavy duty metal dowel in accordance with claim 11, characterized in that the expansion sleeve (3') consists of a rolled sheet metal strip (32') into which the slots (33'), the recesses (34') and gaps between the stop projections (39') are punched.

13. Heavy duty metal dowel in accordance with one of claims 4 to 12, characterized in that the expansion sleeve consists of two concentric, longitudinally slotted sleeve portions (3a', 3b'), of which the inner one (3b') is provided with recesses in the end portion facing the expansion body (2), and the outer one (3a') is provided with recesses in the end portion facing the conical surface (14), in order to form respective flexible end portions (31b' and 39a', respectively).

14. Heavy duty metal dowel in accordance with claim 13, characterized in that the sleeve portions (3a', 3b') have a uniform wall thickness and each consist of rolled sheet metal strips (32a', 32b') into which the respective recesses are punched.

15. Heavy duty metal dowel in accordance with claim 13 or 14, characterized in that in the area of the flexible end portions (39a') the outer sleeve portion (3a') has an inner diameter which substantially corresponds to the inner diameter of the inner sleeve portion (3b'), and in the unstressed condition the outer diameter of the outer sleeve portion (3a') substantially corresponds to the outer diameter of the expansion body (2).

16. Heavy duty metal dowel in accordance with one of claims 13 to 15, characterized in that the inner sleeve portion (3b') comprises at least four flexible end portions (31b'), and is rolled into a cylindrical shape merely outside the area comprising the end portions.

17. Heavy duty metal dowel, in particular for high-strength masonry (5) or concrete, comprising a threaded tie bolt (1) protruding from the masonry, which is in connection with a conical expansion body (2), a coherent, slotted expansion sleeve (3'') slipped over the inner portion of the tie bolt and having an internal expansion surface portion in the masonry, into which the expansion body can be retracted by applying tension on the tie bolt, and comprising a compression member means which is in abutting contact with the outer end of the expansion sleeve, and through which a part of the mounting force can be transferred to the expansion sleeve when the expansion body is retracted, with the compression member means being formed by a stop member whose stopping function can be eliminated under the influence of a certain mounting force, and with the stop member being formed for this purpose by a radial shoulder (13) firmly connected with the threaded tie bolt, and the expansion sleeve comprising in axial direction on the side facing the radial shoulder buckling weak zones in the material, which are formed by holes (39'') oriented in circumferential direction between a portion provided with longitudinal slots (33'') and a rigid collar (36''), characterized in that the longitudinal slots (33'') extend over at least 2/3 of the entire length of the expansion sleeve (3''), are relatively narrow in the area facing the expansion body (2) and extend before the collar (36'') into Ω-shaped recesses (34''), and that the holes (39'') are arranged offset in circumferential direction with respect to the Ω-shaped recesses (34'').

18. Heavy duty metal dowel in accordance with claim 17, characterized in that on the side facing the expansion sleeve (3'') the radial shoulder is provided with surface portions which either apply an additional bending moment on the expansion sleeve (3'') or apply specific compressive forces at precisely defined points along the circumference.

19. Heavy duty metal dowel in accordance with claim 17 or 18, characterized in that the expansion sleeve (3'') consists of a rolled sheet metal strip into which the slots (33''), the recesses (34'') and the holes (39'') are punched.

20. Heavy duty metal dowel in accordance with one of claims 17 to 18, characterized in that the radial shoulder is located outside the object (6) to be fixed, where it is formed either by the screw head (13) of a standard screw or by a tensioning nut screwed onto a threaded bar.

21. Heavy duty metal dowel, in particular for high-strength masonry (5) or concrete, comprising a threaded tie bolt (1) protruding from the masonry, which is in connection with a conical expansion body (2), a coherent, slotted expansion sleeve (300) slipped over the inner portion of the tie bolt and having an internal expansion surface portion in the masonry, into which the expansion body can be retracted by applying tension on the tie bolt, and comprising a compression member means which is in abutting contact with the outer end of the expansion sleeve, and through which a part of the mounting force can be transferred to the expansion sleeve when the expansion body is retracted, with the compression member means being formed by a stop member which is inclined towards the expansion cone (340) and whose stopping function can be eliminated under the influence of a certain mounting force, with the expansion sleeve (300) being provided with a plurality of slots in the internal portion, i.e. in the portion facing the expansion body (2), and being provided with a rigid collar (336) in the external portion, characterized in that the slots (333) extend over at least 2/3 of the entire length of the expansion sleeve (300), are relatively narrow in the internal portion and extend before the collar (336) into Ω-shaped recesses (334), and that the expansion sleeve consists of a rolled sheet metal strip into which the slots (333) and the recesses (334) are punched, with an inner cone surface (339), which is located at the edge and is facing the expansion cone (340) and cooperates with the same, being formed in the sheet metal strip.

**Revendications**

1. Cheville métallique pour fortes charges, notamment pour maçonnerie (5) ou béton de grande résistance, comprenant un boulon tirant fileté (1) faisant saillie de la maçonnerie qui est en liaison avec un corps d'écartement (2) de forme conique, une douille expansible (3) continue, fendue et poussée sur la partie du boulon tirant située a l'intérieur et présentant une section de surface d'écartement s'appliquant contre l'intérieur de la maçonnerie et dans laquelle peut être enfoncé le corps d'écartement par application d'une force de traction au boulon tirant, et un dispositif à corps de pression en contact d'appui avec l'extrémité extérieure de la douille expansible et par lequel une partie de la force de fixation peut être transmise à la douille expansible lorsque le corps d'écartement est enfoncé, le dispositif à corps de pression étant constitué par un élément de butée (12) dont la fonction de butée peut être éliminée sous l'effet d'une force de fixation déterminée, caractérisée en ce que l'élément de butée est constitué par un épaulement radial (12) du boulon tirant (1), qui peut être sectionné par la douille expansible (3).

2. Cheville métallique pour fortes charges selon la revendication 1, caractérisée en ce que l'épaulement radial (12) est constitué par plusieurs sections d'épaulement radial réparties sur la périphérie et par exemple de façon régulière.

3. Cheville métallique pour fortes charges selon la revendication 1 ou 2, caractérisée en ce que l'épaulement radial (12) est constitué par un épaulement annulaire découpé au tour dans le boulon tirant (1).

4. Cheville métallique pour fortes charges, notamment pour maçonnerie (5) ou béton de grande résistance, comprenant un boulon tirant fileté (1) faisant saillie de la maçonnerie qui est en liaison avec un corps d'écartement (2) de forme conique, une douille expansible (3', 3a') continue, fendue et poussée sur la partie du boulon tirant située à l'intérieur et présentant une section de surface d'écartement s'appliquant contre l'intérieur de la maçonnerie et dans laquelle peut être enfoncé le corps d'écartement par application d'une force de traction au boulon tirant, et un dispositif à corps de pression en contact d'appui avec l'extrémité extérieure de la douille expansible et par lequel une partie de la force de fixation peut être transmise à la douille expansible lorsque le corps d'écartement est enfoncé, le dispositif à corps de pression étant constitué par un élément de butée (14) dont la fonction de butée peut être éliminée sous l'effet d'une force de fixation déterminée, caractérisée en ce que l'élément de butée est constitué par une surface conique (14) du boulon tirant allant en diminuant en direction de la douille expansible (3'; 3a'), sur laquelle peuvent être poussées les sections d'extrémité (39'; 39a') de constitution flexible de la douille expansible (3'; 3a').

5. Cheville métallique pour fortes charges selon la revendication 4, caractérisée en ce que la surface conique (14) est constituée par une surface découpée au tour dans le boulon tirant (1).

6. Cheville métallique pour fortes charges selon l'une quelconque des revendications 1 à 5, caractérisée en ce que la section transversale du boulon tirant fileté (1) va en s'élargissant jusqu'au diamètre extérieur de la douille expansible (3; 3a') sur le côté de l'épaulement radial (12) ou de la surface conique (14) qui est tourné vers l'ouverture de la maçonnerie, et en ce qu'entre l'épaulement radial (12) ou la surface conique (14) et cet élargissement de la section transversale est prévu un segment défini (N) dans lequel le diamètre extérieur du boulon tirant (1) est inférieure au diamètre interne de la douille expansible (3; 3a').

7. Cheville métallique pour fortes charges selon l'une quelconque des revendications 1 à 6, caractérisée en ce que la douille expansible (3; 3') est plusieurs fois fendue dans sa région située à l'intérieur, c'est-à-dire dans la région qui est tournée vers le corps d'écartement (2), et est munie dans sa région située à l'extérieur d'une collerette (36; 36') résistant à la flexion.

8. Cheville métallique pour fortes charges selon la revendication 7, caractérisée en ce que les fentes (33; 33') s'étendent sur au moins les 2/3 de la longueur totale de la douille expansible (3; 3'), sont relativement étroites dans la région située à l'intérieur et vont en s'élargissant pour former des évidements (34; 34') en forme d'Ω à avant la collerette (36; 36').

9. Cheville métallique pour fortes charges selon la revendication 7 ou 8, caractérisée en ce que la douille expansible est constituée par une bande de tôle roulée (32; 32') dans laquelle sont estampés les fentes (33; 33') et les évidements (34; 34').

10. Cheville métallique pour fortes charges selon la revendication 9, caractérisée en ce que la douille expansible (3; 3') n'est enroulée que dans la région de la collerette (36; 36') résistant à la flexion et les sections (37; 37') situées entre les fentes (33; 33') sont chacune déformées dans la région de l'évidement en forme d'Ω (34; 34') en une surface d'enveloppe cylindrique partielle et de façon à former après l'opération d'enroulement de la collerette (36; 36') un cylindre sensiblement régulier.

11. Cheville métallique pour fortes charges selon l'une quelconque des revendications 4 à 10, caractérisée en ce que la douille expansible (3') est plusieurs fois fendue dans sa région tournée vers le corps d'écartement (2) et est munie d'une collerette (36') résistant à la flexion dans la région de bord qui est tournée vers l'ouverture de la maçonnerie, collerette à laquelle se raccordent au moins deux saillies de butée (39') flexibles et réparties régulièrement sur la périphérie.

12. Cheville métallique pour fortes charges selon la revendication 11, caractérisée en ce que la douille expansible (3') est constituée par une bande de tôle roulée (32') dans laquelle sont estampés des fentes (33'), des évidements (34') et des espaces libres entre les saillies de butée (39').

13. Cheville métallique pour fortes charges selon l'une quelconque des revendications 4 à 12, caractérisée en ce que la douille expansible est constituée par deux parties de douille (3a'; 3b') concentriques et munies de fentes longitudinales, dont celle qui est à l'intérieur (3b') est munie d'évidements dans la région d'extrémité qui est tournée vers le corps d'écartement (2) et celle qui est à l'extérieur (3a') est munie d'évidements dans la région d'extrémité qui est tournée vers la surface conique (14), de manière à constituer chacune des sections d'extrémité flexibles (31b' ou 39a').

14. Cheville métallique pour fortes charges selon la revendication 13, caractérisée en ce que les parties de douille (3a'; 3b') présentent une épaisseur de paroi régulière et sont constituées respectivement par des bandes de tôle roulées (32a'; 32b') dans lesquelles sont estampés les évidements respectifs.

15. Cheville métallique pour fortes charges selon la revendication 13 ou 14, caractérisée en ce que la partie de douille extérieure (3a') présente dans la région de la section d'extrémité flexible (39a') un diamètre interne qui correspond essentiellement au diamètre interne de la partie de douille interne (3b') et le diamètre externe de la partie de douille externe (3a') correspond essentiellement, à l'état relaxé, au diamètre externe du corps d'écartement (2).

16. Cheville métallique pour fortes charges selon l'une quelconque des revendications 13 à 15, caractérisée en ce que la partie de douille interne (3b') comprend au moins quatre sections d'extrémité flexibles (31b') et n'est enroulée sous une forme cylindrique qu'à l'extérieur de la région comprenant des sections d'extrémité.

17. Cheville métallique pour fortes charges, notamment pour maçonnerie (5) ou béton de grande résistance, comprenant un boulon tirant fileté (1) faisant saillie de la maçonnerie qui est en liaison avec un corps d'écartement (2) de forme conique, une douille expansible (3'') continue, fendue et poussée sur la partie du boulon tirant située à l'intérieur et présentant une section de surface d'écartement s'appliquant contre l'intérieur de la maçonnerie et dans laquelle peut être enfoncé le corps d'écartement par application d'une force de traction au boulon tirant, et un dispositif à corps de pression en contact d'appui avec l'extrémité extérieure de la douille expansible et par lequel une partie de la force de fixation peut être transmise à la douille expansible lorsque le corps d'écartement est enfoncé, le dispositif à corps de pression étant constitué par un élément de butée dont la fonction de butée peut être éliminée sous l'effet d'une force de fixation déterminée et l'élément de butée est constitué à cet effet par un épaulement radial (13) solidaire du boulon tirant fileté et la douille expansible comprend des zones à affaiblissement de matériau pouvant s'infléchir en direction axiale sur le côté tourné vers l'épaulement annulaire, zones qui sont constituées par des passages (39'') orientés en direction périphérique entre une région munie de fente, longitudinales (33'') et une collerette (36'') résistant à la flexion, caractérisée en ce que les fentes longitudinales (33'') s'étendent sur au moins les 2/3 de la longueur totale de la douille expansible (3''), sont relativement étroites dans la région qui est tournée vers le corps d'écartement (2) et vont en s'élargissant par des évidements en forme d'Ω (34'') avant la collerette (36'') et en ce que les passages (39'') sont répartis de façon décalée par rapport aux évidements en forme d'Ω (39'') en direction périphérique.

18. Cheville métallique pour fortes charges selon la revendication 17, caractérisée en ce que l'épaulement radial est muni sur le côté qui est tourné vers la douille expansible (3'') de sections de surface qui appliquent à la douille expansible (3'') soit un moment de flexion additionnel soit des forces de pression appropriées en des points définis avec précision le long de la périphérie.

19. Cheville métallique pour fortes charges selon la revendication 17 ou 18, caractérisée en ce que la douille expansible (3'') est constituée par une bande de tôle roulée dans laquelle sont estampés les fentes (33''), les évidements (34'') et les passages (39'').

20. Cheville métallique pour fortes charges selon l'une quelconque des revendications 17 à 18, caractérisée en ce que l'épaulement radial est situé à l'extérieur de l'objet (6) à fixer, et est constitué soit par la tête (13) d'un boulon standard soit par un écrou de serrage vissé sur une tige filetée.

21. Cheville métallique pour fortes charges, notamment pour maçonnerie (5) ou béton de grande résistance, comprenant un boulon tirant fileté (1) faisant saillie de la maçonnerie qui est en liaison avec un corps d'écartement (2) de forme conique, une douille expansible (300) continue, fendue et poussée sur la partie du boulon tirant située à l'intérieur et présentant une section de surface d'écartement s'appliquant contre l'intérieur de la maçonnerie et dans laquelle peut être enfoncé le corps d'écartement par application d'une force de traction au boulon tirant, et un dispositif à corps de pression en contact d'appui avec l'extrémité extérieure de la douille expansible et par lequel une partie de la force de fixation peut être transmise à la douille expansible lorsque le corps d'écartement est enfoncé, le dispositif à corps de pression étant constitué par un élément de butée constitué sous forme de cône d'écartement (340) allant en diminuant en direction de la douille expansible, dont la fonction de butée peut être éliminée sous l'effet d'une force de fixation déterminée, la douille expansible (300) étant plusieurs fois fendue dans sa région située à l'intérieur, c'est-à-dire tournée vers le corps d'écartement (2) et est munie dans sa région située à l'extérieur d'une collerette (336) résistant à la flexion, caractérisée en ce que les fentes (333) s'étendent sur au moins les 2/3 de la longueur totale de la douille expansible (300), sont relativement étroites dans la région située à l'intérieur et vont en s'élargissant en évidements en forme d'Ω (334) à l'avant de la collerette (336), et en ce que la douille expansible est constituée par une bande de tôle roulée dans laquelle sont estampés les fentes (333) et les évidements (334), une surface conique interne (339) située du côté du bord, tournée vers le cone d'écartement (340) et coopérant avec ce dernier, étant formée dans la bande de tôle.

Fig.1

Fig.2

Fig.3

Fig.4

38

35

Fig.5

3

35

34

33

33

34

316'

Fig. 11

36'

Fig. 6

Fig. 7

Fig. 8

Fig. 9

Fig. 10

Fig. 12

Fig. 13

Fig. 14